# EUROPEAN PATENT SPECIFICATION

(11) **EP 2 567 349 B1**
(45) Date of publication and mention of the grant of the patent: **12.11.2014**
(21) Application number: 11713745.5
(22) Date of filing: 05.04.2011
(51) Int. Cl.: G06K 19/077

(54) **MANUFACTURING RFID INLAYS**
FERTIGUNG VON RFID-EINLAGEN
FABRICATION D'IMPLANTS RFID

(30) Priority: 05.04.2011 US 472182 P; 17.01.2011 US 433353 P; 27.03.2011 US 468007 P; 15.02.2011 US 201113027415; 13.02.2011 US 442284 P; 31.01.2011 US 437795 P; 30.01.2011 US 437649 P; 16.11.2010 US 414408 P; 13.11.2010 US 413438 P; 11.10.2010 US 901590; 07.09.2010 US 877085; 13.07.2010 US 363763 P; 04.05.2010 US 331368 P
(43) Date of publication of application: 13.03.2013
(73) Proprietor: Féinics AmaTech Teoranta, Tourmakeady, County Mayo (IE)
(72) Inventor: FINN, David, Tourmakeady County Mayo (IE)
(74) Representative: Cremer, Ulrike Theresia
(86) International application number: PCT/EP2011/055257
(87) International publication number: WO 2011/138109

(56) References cited:
- US-A1- 2004 155 114
- US-A1- 2007 146 135
- US-A1- 2008 314 990

## Description

### TECHNICAL FIELD

The invention relates to "inlay substrates" used in the production of "inlays" for "security documents" such as electronic passports, electronic ID cards and smart cards and, more particularly, for example, to how an antenna may be mounted to the inlay substrate (and connected to an RFID (radio frequency identification) chip or chip module disposed on the inlay substrate).

### BACKGROUND

An "inlay" (or "transponder") may be incorporated into secure documents such as "smart cards" and "electronic passports" using RFID technology, and may comprise:
- an inlay substrate comprising a plurality of transponder sites,
- an antenna (typically in the form of a flat coil) comprising a few turns of conductor,
- an RFID chip (or chip module) disposed on or in (typically in a recess in) the inlay substrate, wherein "terminal ends" (termination ends, end portions, connection portions) of the antenna wire are connected (bonded) to "terminal areas" (terminals, contact pads) of the chip module.

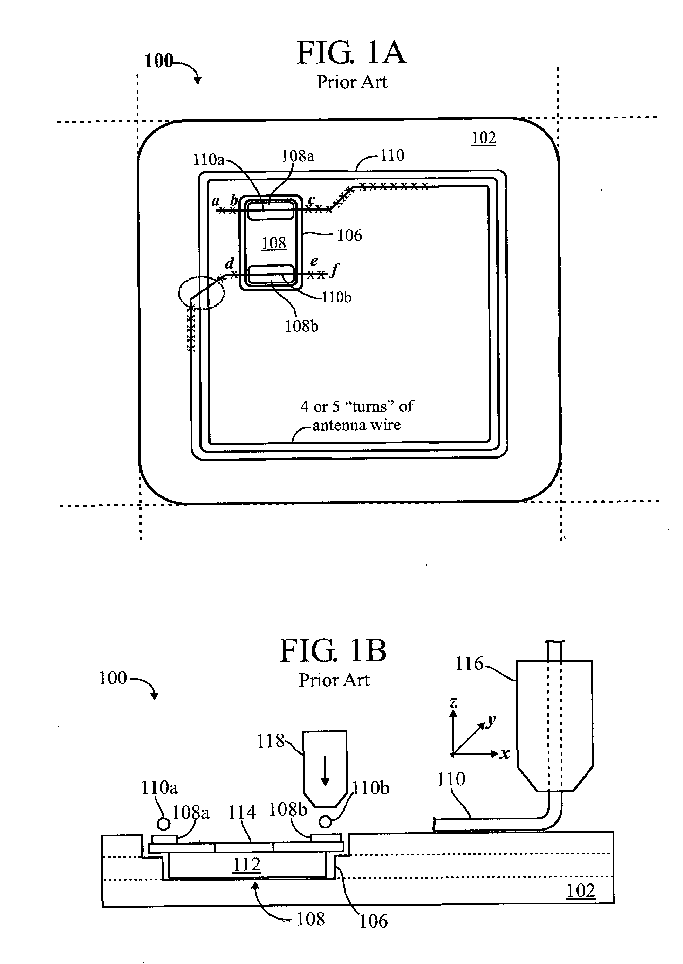

**FIGs. 1A** and **1B** illustrate an inlay comprising an inlay substrate, a chip module and an antenna, such as disclosed in US 6,233,818.

The inlay substrate may comprise one or more layers of Polyvinyl Chloride (PVC), Polycarbonate (PC), polyethylene (PE), PET (doped PE), PETE (derivative of PE), TYVEK, Teslin™, Paper or Cotton/Noil, and the like. For example, a single layer of uncoated Teslin™, with a thickness of 356 microns. In the main hereinafter, inlay substrates comprising Teslin™ or polycarbonate (PC) will be described.

The antenna conductor may be self-bonding (or self-adhering) wire comprising; a metallic core (typically, but not necessarily round in cross-section) comprising copper, aluminum, doped copper, gold, or Litz wire, and may have a diameter of 0.010 - 0.50mm; a first coating or "base coat" comprising modified polyurethane, and having a thickness of only a few microns; and a second coating comprising polyvinylbutyral or polyamide, and having a thickness of only a few microns.

The chip module may be a leadframe-type chip module or an epoxy glass type chip module. In the main hereinafter, leadframe-type chip modules are discussed, which may comprise an RFID chip encapsulated by a mold mass and supported by and connected to a leadframe having two terminal areas. The mold mass may be approximately 240 µm thick and 5 mm wide, the leadframe may be approximately 80 µm thick and 8mm wide. The total thickness of the leadframe module may be 320 µm, such as for an inlay substrate having a thickness of approximately 356 µm. Generally, the chip module will be disposed in a recess in the inlay substrate so as to be concealed therein.

The recess (or cavity) for receiving the chip module may extend into the inlay substrate from a "top" surface thereof, and may be a "window" type recess extending completely through the inlay substrate to a "bottom" surface thereof, or the recess may be a "pocket" type recess extending only partially through the inlay substrate towards the bottom surface thereof. The **recess** may have a "straight" profile, or it may have a "stepped" profile. The recess is generally sized and shaped to accommodate the size and shape of the chip module being disposed therein.

A conventional method of mounting an antenna wire to an inlay substrate is to use a sonotrode (ultrasonic) tool which vibrates, feeds the wire out of a capillary, and embeds it into or sticks it onto the surface of the inlay substrate, in the form of a flat coil, with ends or end portions of the antenna wire connected, such as by thermo compression (TC) bonding, to terminal areas of the chip module. See US 6,698,089 and US 6,233,818.

**FIGs. 1A** and **1B** illustrate an example of a prior art technique for mounting an antenna wire 110 to an inlay substrate 102 and connecting the antenna wire to a chip module 108 installed in a recess 106 in the inlay substrate (at a transponder site). An inlay sheet 100 may comprise a plurality of transponder sites, only one of which is shown in some detail. The dashed lines in FIG. 1A indicate that there may be other transponder sites above, below, to the left or to the right of the illustrated transponder site.

A pocket-type recess 106 is formed in the inlay substrate 102 for receiving a leadframe-type RFID chip module 108, positioned with the mold mass 112 situated below a leadframe 114.

The inlay substrate 102 is shown as a single layer substrate, but it may comprise two or more layers. The leadframe 114 of the chip module 108 has two terminal areas 108a and 108b. An antenna wire 110 is mounted to the inlay substrate 102 and is connected to the terminal areas 108a and 108b of the chip module 108 by its termination ends (connection portions, ends, end portions).

The wire 110 may be mounted to the inlay substrate 102 by embedding (as indicated by the symbols "x") between the points "a" and "b", then passing over the first terminal 108a of the chip module 108 between the points "b" and "c" (without embedding), then embedding to form the turns of the antenna between the points "c" and "d", then passing over the second terminal 108b of the chip module 108 between the points "d" and "e", then embedded a short distance between the points "e" and "f". The antenna may comprise 4 or 5 turns of wire, and the overall length of the antenna wire 110 may be approximately 104cm. In forming the turns of the antenna, the wire may need to cross over itself (dashed circle), thus requiring an insulated wire. In some cases, the antenna wire does not need to cross over itself. See, for example, FIG. 4 of US 6,698,089. The embedding process (such as between the points "c" and "d") may be discontinuous, at several points, rather than continuous. In a next (second) stage of the process, the "connection" portions of the antenna wire 110 passing over the terminal areas 108a and 108b are interconnected thereto, such as by means of thermo compression bonding. It is known to remove insulation from the connection portions of the antenna wire to improve bonding. Since it is difficult to embed in Teslin™, it is known to use "self-bonding" wire which attaches with a slight penetration of the wire in the material.

The antenna mounting (and connecting) process described in FIGs. 1A, 1B may be referred to as the "common substrate" method, which comprises forming the antenna wire on the inlay substrate by scribing (typically ultrasonic embedding), and connecting ends or end portions of the antenna wire to terminal areas of the chip module. Another method of mounting the antenna may be referred to as the "coil winding" method, which comprises forming the antenna wire separately from the inlay substrate and installing the preformed antenna wire (sometimes with the chip module already mounted to ends of the antenna wire) thereto. These techniques may be described in the following patents: US 5,809,633 (Mundigl et al.), EP 0 839 360 (Finn et al.), US 6,295,720 (Finn et al.), EP 1 352 551 (Michalk), US 6,088,230 (Finn et al.), US 6,233,818 (Finn et al.), US 6,698,089 (Finn et al.) and US 6,626,364 (Taban).

The coil winding process, may require pressing the coil into the substrate by means of heat and pressure, is highly unreliable, slow and difficult to automate for volume production. The tooling is also subject to wear and tear resulting in coils having different geometrical dimensions. One major disadvantage of the coil winding technique is the inability to form an antenna with a large pitch between the wire conductors which form the antenna.

Although common substrate techniques represent an improvement over coil winding in terms of antenna quality and throughput, a disadvantage is that different inlay formats require mechanical alterations to the production equipment resulting in downtime and inefficient use of the equipment, in particular where the number of transponder sites on a format is very low, as is the case in the production of inlays for electronic passports ("2up" or "3up" formats). Also, embedding antenna wire in a substrate such as Teslin™ may be difficult.

Another example of prior art is disclosed in US 2007/146135 A1.

US 7,229,022 (Rietzler) and US 2008/0314990 (Rietzler), disclose a method wherein an array of antennae are installed on a separate substrate to the substrate hosting the RFID chips with an identical format. The antenna substrate is then placed over the substrate with the array of RFID chips and the termination areas of each antenna are manually connected to each chip on the respective transponder site. The wire ends of each antenna span a bridge over an opening in the antenna substrate and therefore a distance remains between the wire bridges over the opening and the chip modules on the other substrate. A difficulty with such a method is alignment of the wire ends with the terminal areas of a chip module, which may require manually aligning the wire ends for interconnection by hand.

A security document may be a National ID (identification) Card (or electronic ID, "eID" card) comprising a multi-layer (2 layer) inlay substrate, and additional layers comprising a top overlay layer and a bottom overlay layer. The additional top and bottom layers may be anti-scratch layers, and protect the inlay substrate(s). The layers of the inlay substrate for a smart card may comprise PVC (polyvinyl chloride). The layers of the inlay substrate for a national ID card may comprise PC (polycarbonate), which may be more durable than PVC.

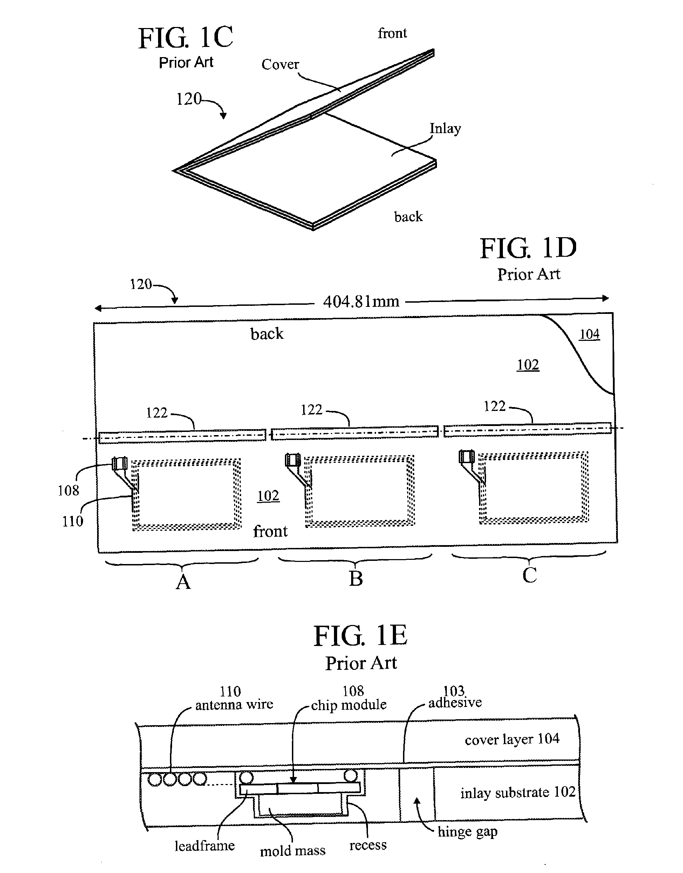

A security document may be an electronic passport 120 comprising a Teslin™ inlay substrate 102. See **FIGs. 1C****,D,E.** A cover layer 104 may be disposed over the inlay (inlay substrate 102, plus chip module 108, plus antenna 110). The material for the cover layer 104 may be "Holliston fabric", a cloth product, with chemistry in the coatings and a leather-like appearance (www.holliston.com). The cover layer (typically 350 µm thick), may be laminated (joined) to the inlay substrate (typically 356 µm thick) using a polyurethane hot melt adhesive 103 (typically 50-80 µm thick). Prior to the adhesive process, the inlay substrate 102 may be pre-pressed to ensure that the antenna wire 110 does not protrude over (extend above) the surface of the Teslin™ substrate, in other words, to ensure that the antenna wire is fully embedded in the inlay substrate.

The inlay format is typically "3up" (for making three passport covers at once), and is generally planar and rectangular, having exemplary overall dimensions of 404.81mm x 182.56mm x 0.70mm (thick). Each one of the three covers (A), (B) and (C) are generally rectangular, having exemplary dimensions of (404.81mm / 3) = 134.94mm x 182.56mm, with a thickness of 0.70mm.

In **FIG. ID,** "A", "B" and "C", each represent a "transponder site" for a given passport cover 120. For each transponder site, a hinge gap 122 may be provided, separating the "front" portion from the "back" portion of the passport cover(s). An RFID chip module 108 may be disposed in a recess 106 in the inlay substrate 102. An antenna wire 110 may be mounted to the inlay substrate 102 and connected with the chip module 108.

Non-reactive adhesives based on polyamide are typically not used in electronic passports for security reasons, as it would be possible to de-laminate the material by applying heat. Instead, reactive adhesive, moisture curing hot melt adhesive based on polyurethane, is used. The adhesive can be characterized by a high initial tack and a long open time (several minutes) or a short setting time (several seconds). In the latter case, the adhesive has to be reactivated using infra red light before the cover layer is attached to the inlay, or hot laminated within a certain period (within 1 to 2 hours). The adhesive cures exclusively in the presence of moisture and gains its final strength after 3 to 7 days. The adhesive may be applied to the cover layer (cover material) at approximately 150 degrees Celsius, putting down a layer of 50 to 80 microns (µm). The inlay is applied to the cover layer (cover material) in web or in sheet form, and is then laminated together using a roll press. Thereafter, the laminated inlay with the cover layer (cover material) is cut to size and stored in a stack for 3 to 7 days in a storage area having a regulated temperature and humidity.

A conventional method of manufacturing an inlay for a holder-page passport or national identity card is to draw two layers of substrate material from two webs and feed them through a machine in which several production steps are performed before the two layer inlay is cut into a sheet format. The production process is a sequential process in which the cycle time and production throughput is determined by the slowest production step, which is typically embedding the antenna in the inlay substrate. The production process may start with sheets, already cut to the desired inlay format. The inlay sheets are manually placed on a tray which is transported on a drive system through the machine which processes each inlay sheet on a transport tray at each production step. Each production station and the transport system are linked together and in the case of a mechanical or software problem the machine comes to a complete halt.

### SUMMARY

Various techniques are disclosed herein for: forming a plurality of antenna structures on an antenna substrate (carrier or transfer substrate, or film or layer) at a plurality of antenna sites on the antenna substrate; the antenna structures may be formed in an adhesive layer on a carrier; the antenna substrate (or carrier) may be in the form of an elongate web, or a sheet; transferring the antenna structures one-by-one or many at once from the antenna substrate to the inlay substrate, various means and processes may be used to transfer the antenna structures to the inlay substrate. The antenna structures may be completely separated from the antenna substrate during the transfer process, and after the transfer process the antenna substrate may be removed, and may be reused. Because the antenna structure is first arranged on or in the antenna substrate, the pitch (distance between the antenna wires or conductor tracks) and the shape of the antenna structure remain substantially intact during the transferring and mounting of the antenna structure and its termination ends (connection portions, end portions) to the transponder site and chip module. The fixing of the antenna structure onto or into the inlay substrate may be through the application of heat and pressure.

Various techniques for automating the processes of forming antenna structures on antenna substrates and transferring the antenna structures to inlay substrates are disclosed. Various components for kits for manufacturing inlays and secure documents are disclosed.

In some embodiments of the invention, a method of forming RFID inlays may comprise: providing an inlay substrate comprising chip modules at transponder sites; providing an antenna substrate comprising antenna structures; transferring, such as by laminating, antenna structures to the inlay substrate. After transferring the antenna structures, the antenna substrate may be removed. Termination ends of the antenna structures may be bonded to terminal areas of the chip module. The antenna substrate may be in sheet or web (reel) format. The antenna structures may comprise wire or other conductive material either on or in the antenna substrate. The antenna structures may be formed on the antenna substrate, or in a layer of adhesive on the antenna substrate. (Alternatively, the antenna structures may be formed such as by coil winding techniques, and disposed on the antenna substrate for subsequent transfer to the inlay substrate.) The antenna structures may be transferred one at a time or several at once to corresponding transponder site(s) on the inlay substrate. The antenna structures may be completely released from the antenna substrate, or some of the antenna substrate may stay with the antenna structures. Remaining antenna substrate material may be removed. Chip modules may be disposed in recesses at the transponder sites on the inlay substrate. (Alternatively, the chip modules may be mounted to the antenna structures and transferred therewith to the inlay substrate.) The inlay substrates may be prepared with wide trenches to accept the antenna structures (and any accompanying antenna substrate material).

In some embodiments of the invention, a kit for RFID inlays may comprise at least one of the following components: an antenna component comprising an antenna substrate and a plurality of antenna structures formed on the antenna substrate; a wire component comprising an insulated wire having areas where insulation has been removed, said areas spaced a distance apart corresponding to a desired length of an antenna for the RFID inlay; an inlay substrate component comprising an inlay substrate prepared with a recess for receiving a chip module and at least one of: channels for receiving an antenna wire, a wide trench for receiving at least a portion of an antenna structure, an antenna wire with squiggles at its ends for receiving terminal areas of a chip module, trenches extending to near or into the recess, notches in sides of the recess for receiving pins, bumps extending from sides of the recess for stabilizing a chip module from moving when it is in the recess, slots disposed adjacent the recess for holding a chip module in the recess, and perforations disposed around the recess. The kit may further comprise the following components: a chip module component; a glue component (840); and a cover material component. The antenna component may be supplied in web format or sheet format, and may comprise at least one material selected from the group consisting of polycarbonate (PC), polyvinyl chloride (PVC), paper, Teflon and polyurethane. The inlay substrate may comprise a synthetic material selected from the group consisting of polycarbonate (PC) and Teslin™. The antenna wire may be insulated wire having insulation removed at areas corresponding to termination end of an antenna formed by the wire, and may have a passivation applied to the areas.

Some embodiments of the invention may provide improvements over prior techniques for forming inlay substrate, such as not requiring the antenna to be formed on the inlay substrate (cf. US 6,233,818), not requiring a high level of correspondence between the format (number, layout, pattern) of antenna devices on the inlay substrate and chip modules on a laminator plate or substrate (cf. Rietzler US 7,229,022, US 2008/0314990), and coil winding techniques (cf. Mundigl et al. US 5,809,633), which are not well suited to mass production.

### BRIEF DESCRIPTION OF THE DRAWINGS

Reference will be made in detail to embodiments of the disclosure, non-limiting examples of which may be illustrated in the accompanying drawing figures (FIGs). The figures are generally diagrams. Some elements in the figures may be exaggerated, others may be omitted, for illustrative clarity. Although the invention is generally described in the context of various exemplary embodiments, it should be understood that it is not intended to limit the invention to these particular embodiments, and individual features of various embodiments may be combined with one another.
**FIG. 1A** is a top view of a transponder site on an inlay substrate, according to the prior art.
**FIG. 1B** is a cross-sectional view illustrating a wire being mounted to an inlay substrate and the wire being bonded to the terminals of a chip module, according to the prior art.
**FIG. 1C** is a perspective view of an electronic passport cover, according to the prior art.
**FIG. ID** is a top view of an inlay for passport covers, according to the prior art.
**FIG. 1E** is a cross-sectional view of the passport cover of **FIG. 1D**.
**FIG. 2A** is a partial perspective view showing forming a recess in a substrate.
**FIG. 2B** is a partial cross-sectional view showing forming a channel in a substrate, and laying a wire in the channel.
**FIG 2C** is a partial top view of a recess and channels extending from edges of the recess.
**FIG. 2D** is a partial perspective view of channels crossing each other in a substrate.
**FIG. 2E** is a cross-sectional view illustrating mounting an antenna wire in a channel in an adhesive layer on a substrate.
**FIG. 2F** is a cross-sectional view illustrating a flowable, conductive material being applied on a surface of a substrate to fill a channel.
**FIG. 2G** is a cross-sectional view illustrating a flowable, conductive material being applied to fill a channel in an adhesive layer on a substrate.
**FIG. 3A** is a cross-sectional view illustrating forming channels in a substrate, such as for receiving individual turns of an antenna structure.
**FIG. 3B** is a cross-sectional view illustrating forming a wide trench in a substrate, such as for receiving an antenna structure.
**FIG. 3C-3F** are cross-sectional views of steps in a technique for applying adhesive to a layer of passport cover material.
**FIG. 4A** is a top view illustrating the formation of antenna structures on an antenna substrate.
**FIG. 4B** is a top view illustrating the preparation transponder sites on an inlay substrate.
**FIG. 4C** is a top view illustrating an inlay having antenna structure(s) at transponder site(s).
**FIG. 5A-5D** are cross-sectional views illustrating transferring antenna structures from an antenna substrate to an inlay substrate, according to various embodiments of the invention.
**FIG. 5E** is a top view illustrating forming a plurality of antenna structures on an antenna substrate in web form, according to an embodiment of the invention.
**FIG. 5F** is a partial cross-sectional view taken on a line 5F-5F through **FIG. 5D****.**
**FIG. 5G** is a cross-sectional view illustrating a further step in the technique of **FIG. 5F****.**
**FIGs. 6A - 6C** are partial cross-sectional views illustrating forming a plurality of antenna structures on an antenna substrate and transferring them to an inlay substrate, according to an embodiment of the invention.
**FIG. 6D** is a perspective view illustrating forming a plurality of antenna structures on an antenna substrate, according to an embodiment of the invention.
**FIG. 6E** is a perspective view illustrating forming a plurality of transponder sites on an inlay substrate, according to an embodiment of the invention.
**FIG. 6F** is a cross-sectional view taken on lines 6F-6F through **FIGs**. **6D** and **6E****,** illustrating transferring the antenna structures from the antenna substrate to the inlay substrate, according to an embodiment of the invention.
**FIGs. 7A** and **7B** are diagrams preparing antenna substrates with antenna structures, according to an embodiment of the invention.
**FIG. 7C** is a diagram illustrating preparing inlay substrates, according to an embodiment of the invention.
**FIG. 7D** is a diagram of a production line for manufacturing inlays, according to an embodiment of the invention.
**FIGs. 8A-8G** are diagrams or views of components of a kit for manufacturing inlays, according to some embodiments of the invention. More particularly, **FIG. 8A** is a top view of an antenna component, **FIG. 8B** is a perspective view of a wire component, **FIG. 8C** is a top view of an inlay substrate component, **FIG. 8D** is a diagram of a chip module component, **FIG. 8E** **is** a diagram of a glue component, **FIG. 8F** is a diagram of a cover material component, and **FIG. 8G** is a diagram of other components of the kit for manufacturing inlays.

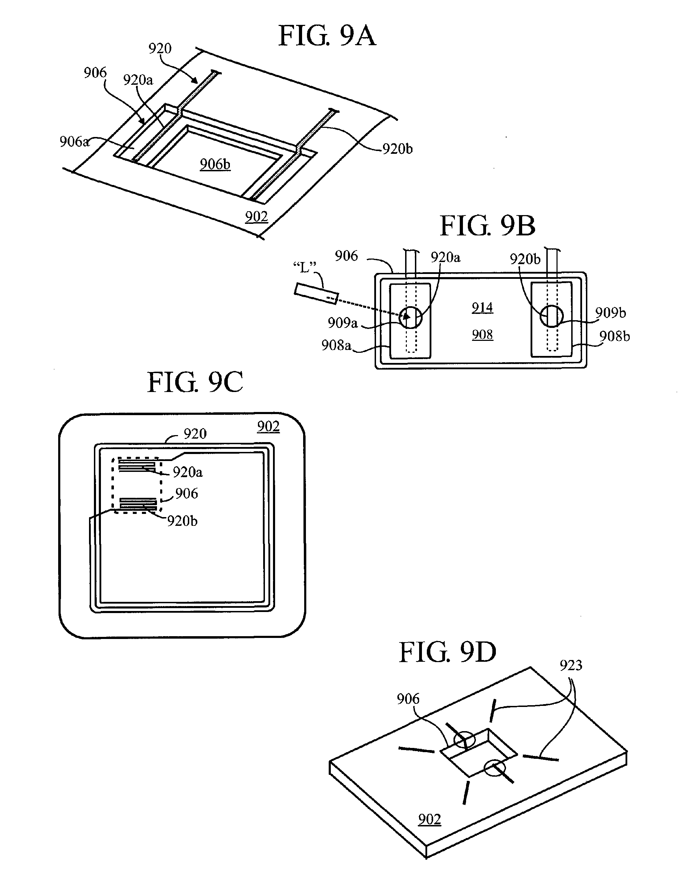

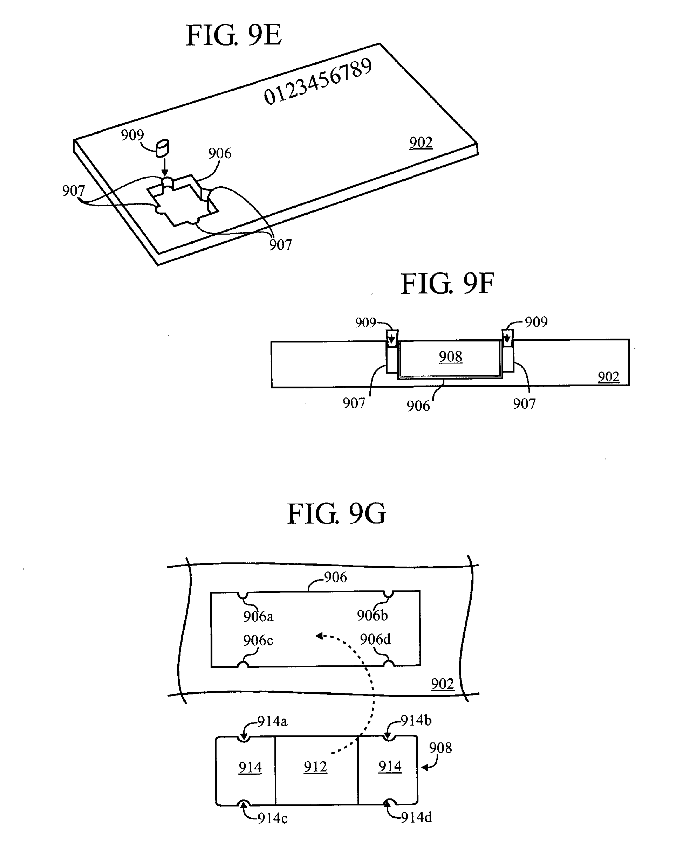

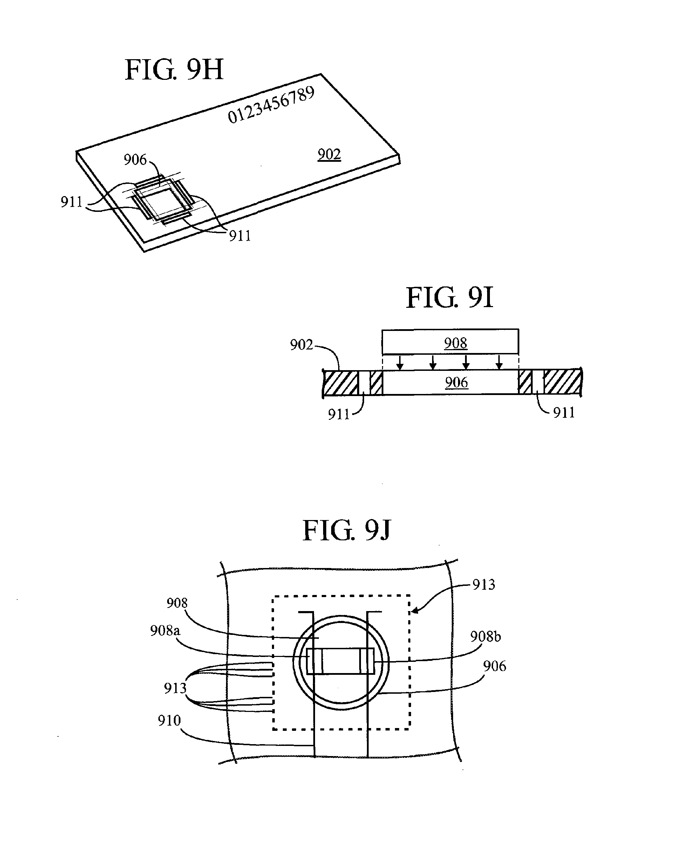

**FIGs. 9A-9J** are diagrams or views of embodiments or features of inlay substrate components, according to some embodiments of the invention. More particularly, **FIG. 9A** is a perspective view of an inlay substrate component, **FIG. 9B** is a top view of the inlay substrate of **FIG. 9A, FIG. 9C** is a top view of an inlay substrate component, **FIG. 9D** is a perspective view of an inlay substrate component, **FIG. 9E** is a perspective view of an inlay substrate component, **FIG. 9F** is a side view of the inlay substrate of **FIG. 9E, FIG. 9G** is an exploded top view of an inlay substrate component and chip module component, **FIG. 9H** is a perspective view of an inlay substrate component, **FIG. 9I** is a side view of the inlay substrate of **FIG. 9H****,** and **FIG. 9****J** is a top view of an inlay substrate component.

### DETAILED DESCRIPTION OF SOME EMBODIMENTS OF THE INVENTION

Various embodiments will be described to illustrate teachings of the invention(s), and should be construed as illustrative rather than limiting. In the main, electronic passport covers with inlay substrates having leadframe modules may be used to illustrate the embodiments.

### Forming Recesses in a Substrate

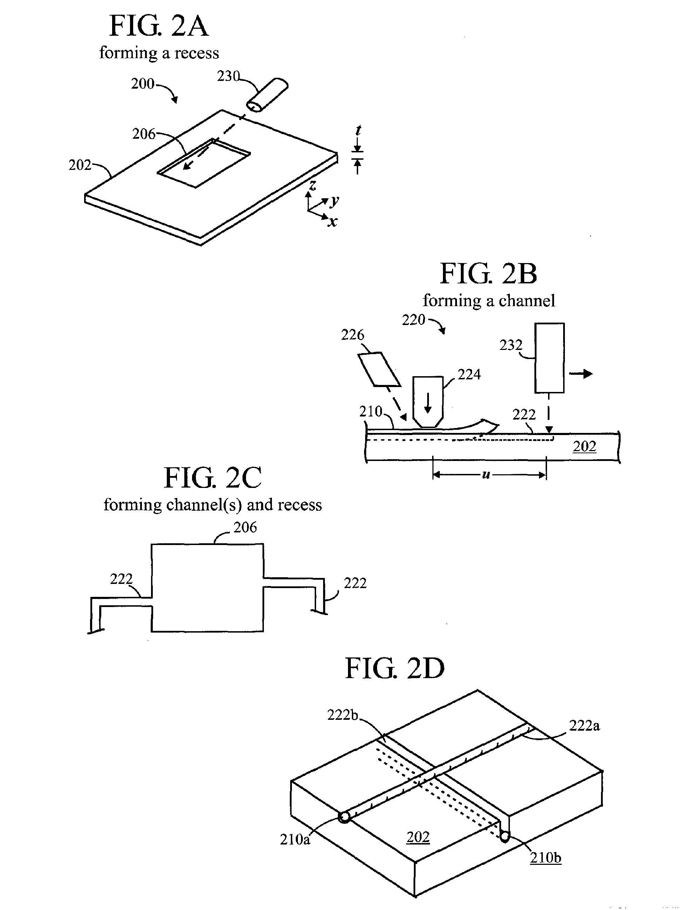

**FIG. 2A** illustrates a technique 200 for forming a recess 206 in a substrate 202 (such as an inlay substrate), using a laser 230. The inlay substrate 202 may be a single layer of Teslin™ (for example), having a thickness "t" of 356 µm. A typical size (width dimensions) for the recess 206, to accommodate a chip module with a lead frame, may be approximately 5 mm x 8 mm. The recess may extend completely through the inlay substrate, resulting in a "window-type" recess. The recess may extend only partially, such as 260 µm through the inlay substrate, resulting in a "pocket-type" recess (**FIG. 1B** illustrates a pocket-type recess).

The laser 230 emits a beam (dashed line), targeted at the substrate, to ablate material from the substrate to form the recess. The beam may have a diameter of approximately 15 to 60 µm. The beam may be scanned back and forth across the recess area, making many passes to form the recess 206. Many passes may be required to carve out the entire area and depth of the recess, given that the beam diameter is typically much (such as 10 - 100 times) smaller than the length or width of the recess. The beam may be scanned, in any suitable manner, such as with scanning mirrors. The intensity of the beam may be controlled or modulated to control the penetration into the substrate. For example, a pulse-width modulated beam may be used. The Laser may be a UV laser (355 nm) with a power ranging from 15 to 50 watts. The process of using a laser in this manner, rather than (for example) a conventional rotating milling tool, may be referred to as "laser milling". Laser milling can be very effective for Teslin™ and polycarbonate (PC) substrates. For Polyvinyl Chloride (PVC), laser milling is less effective. (See DE 199 15 765, 19.10.2000, die Kavitäten durch laserbewirkte Thermoplastablation erzeugt werden)

### Forming Channels in a Substrate

The antenna wire may be mounted to the surface of an inlay substrate by ultrasonically embedding (countersinking) it into the surface of the inlay substrate. Ideally, the antenna wire would be fully embedded so that it is flush or below the top surface of the inlay substrate, so that the antenna not be visible (known as "witnessing the wire") to the user in the end product. With ultrasonic embedding, the wire may become only partially embedded, and with Teslin™ it is very difficult to ultrasonically embed an antenna wire. Self-bonding wire may be used, and after mounting the wire (typically intermittently, at a sequence of points) on the substrate (and forming the turns of the antenna) the turns of the antenna may be pressed into the substrate, using heat and/or pressure, through a lamination process

**FIG. 2B** illustrates a technique 220 for forming a channel (groove, trench) 222 in a surface of a substrate 202 (such as an inlay substrate), using a laser 232. After the channel is formed, a wire 210 may be laid in the channel 222 using a simple pressing tool (or wheel) 224. The wire 210 may be laid into the channel 222during formation of the channel 222, by following behind (to the left of) the laser 232 a distance "u". Or, the wire 210 may be installed after the entire channel 222 is completed. The wire 210 may be a self-bonding (coated, self-adhering wire). By first forming channels to accept the wire in the substrate, several advantages may be realized, such as eliminating the need for the pressing operation associated with ultrasonic embedding of the antenna wire. A heating element 226 may be provided, such as a nozzle directing hot air onto the wire 210. The heating element 226 may be a laser operating in a range to heat the wire sufficiently to activate its adhesive coating.

If the diameter of the laser beam is sufficiently wide (corresponding with the desired width of the channel), and has sufficient fluence (to penetrate to the desired depth of the channel), the channel may be formed with one pass of the laser. To enhance the quality (such as texture) of the structure of the channel, it may be advantageous to use an ultrafast laser (in the picosecond or femtosecond range) using a low fluence above the threshold fluence and removing material layer by layer (several passes). At high fluence, there is a trade-off in rate of material removal and the quality of etching.

A channel 222 may be formed in a substrate with multiple passes of the laser, resulting the channel having a U-shaped or tapered profile. For example, a first pass of the laser may form a first portion of the channel having a width of approximately 100 µm (such as 97µm) and a depth of 5µm (dependent on the laser pulse energy and repetition rate). A second and several subsequent aligned passes of the laser may extend the previously formed portion(s) of the channel deeper, maintaining the same 97µm width, until an intermediate channel depth of 45 or 50µm is achieved - half of the desired overall depth of the channel. Then, maintaining alignment, in subsequent several passes the width of the laser beam may be lessened with each pass, resulting in a bottom portion (half) of the channel tapering down. In this manner, a channel can be created which has a profile (cross-section) similar to that of the wire. This may increase the opportunity for the antenna wire to stick to the walls of the channel. Alternatively, masks may be used to block portions of the laser beam and effect a similar stepwise decrease in width accompanying increase in depth.

Some exemplary operating conditions for the laser may be:
- operating the laser at a pulse repetition rate of 30 - 40 kHz (one pulse every approximately 30 microseconds), and
- the duration of each pulse may be less than approximately 10 picoseconds.

A low duty cycle (relatively short laser pulse in a relatively long interval) may be advantageous for "cold ablation", where the material is not significantly heated. The substrate may comprise a polymer which is porous, facilitating the laser ablation, and the ablation may be performed in an inert atmosphere. Debris from the ablation process can be removed through a suction system.

**FIG. 2C** shows that a 2-dimensional pattern of channels 222 can be created in a substrate (not shown, such as an inlay substrate), such as using laser ablation or any other suitable process (such as gouging or molding), to accept an antenna wire (110, 210) having a number of turns or coils (such as shown in **FIG. 1A**). The channel(s) 222 may extend from edges of a recess 206 for accepting a chip module (108).

**FIG. 2D** illustrates a method of forming a pattern of channels (or portions of an overall channel) in a substrate 202 (such as an inlay substrate) to accommodate an antenna wire in a situation where the wire needs to cross over itself (such as shown in **FIG. 1A**), in which case insulated wire may be appropriate. A shallow channel 222a is shown crossing over a deep channel 222b. The channel 222a and 222b may be different portions of one overall channel (222). A wire 210a laid in the shallow channel 222a crosses over a wire 210b laid in the deep channel 222b. The wire 210a and 210b may be different portions of one overall wire (210). Some exemplary dimensions are:
- the wire 210 may have a diameter of 80 µm
- the channel(s) 222 may have a width of 100 µm
- the shallow channel 222a may have a depth of 100 µm
- the deep channel 222b may have a depth of 200 µm
- the substrate 202 may have a thickness of 350 µm

The wire (or portion) 210b passes under the wire (or portion) 210a, without shorting thereto.

### Forming Channels in an Adhesive Layer

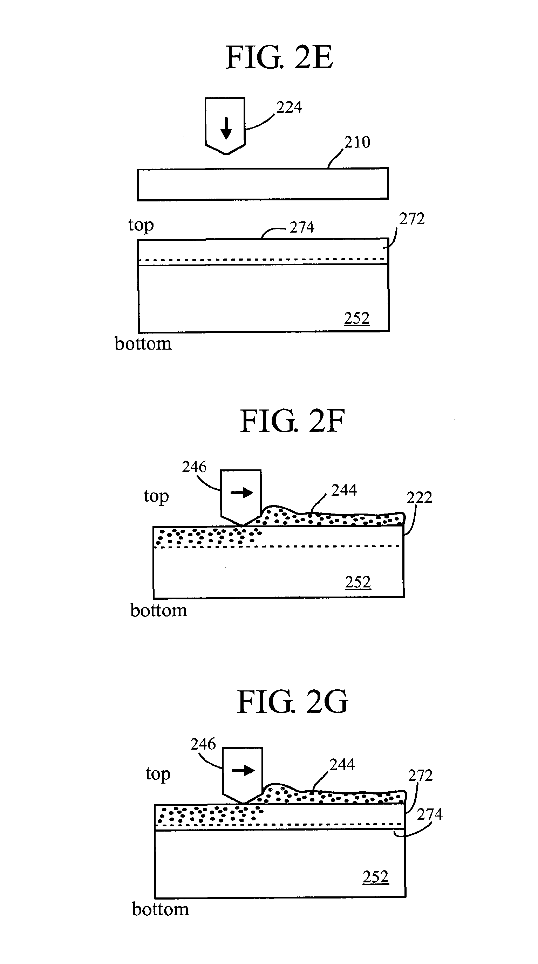

**FIG. 2E** illustrates that a channel 272 may be formed in a layer 274 of adhesive on the surface of a substrate 252 (such as an inlay substrate), and a wire 210 may be laid in the channel 272 using a simple mechanical tool 224. For example, the adhesive 274 may be 50-80 µm thick polyurethane, and the channel 272 may extend at least partially through the adhesive 274 (note the dashed line). Polyurethane, once beyond its "open time", goes hard, making it ideal for channel formation. Later, for laminating, it may be reactivated with a heat source, such as an infrared light. The adhesive may be applied sufficiently in advance of channel formation, such as 1-10 minutes (for example) before, to facilitate channel formation.

### Filling Channels in a Substrate or an Adhesive Layer

**FIG. 2F** illustrates a substrate 252 (such as an inlay substrate) having a channel(s) 222 formed in a top surface thereof, and a quantity of flowable, conductive material 244 applied on the surface. Some of the material 244 may be in the channel 222. The conductive material 244 may be viscous, such as metallic powder or conductive glue. A squeegee 246 may be lowered onto and advanced across the surface of the substrate 252 to force the conductive material 244 into the channel 222. Residual conductive material 244 is substantially cleared from the surface of the substrate 252, but an additional cleaning step may be added.

**FIG. 2G** illustrates that a channel(s) 272 can be formed in a layer 274 of adhesive on the surface of the substrate 252 ("carrier") and filled with conductive material 244. In this example, the adhesive 274 is 80 µm thick glue. The channel (groove, trench) 262 may be, for example, 60-80µm deep. The channel 262 may go all the way through the adhesive 274, and further into the substrate 252.

### Installing Antennae in Channels or Trenches

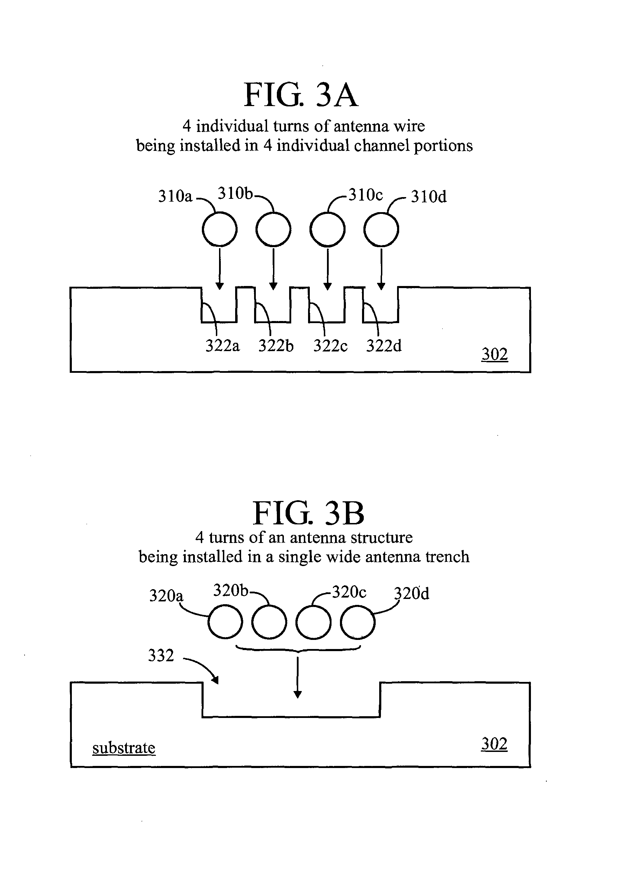

**FIG. 3A** shows four individual portions 310a, 310b, 310c, 310d such as four turns of an antenna wire (310) being inserted into corresponding four individual portions 322a, 322b, 322c, 322d of a channel (322) or channels in a substrate 302 (such as an inlay substrate). Each portion of the wire may be inserted (laid) sequentially (turn-by-turn) into the corresponding channel portion as the turns of the antenna are formed on the substrate, such as using an ultrasonic tool. The channel (322) may be formed by laser ablation. A completed antenna may be referred to as an "antenna structure", such as described in the next figure. Terminal ends (connection portions) of the antenna structure may be connected with corresponding terminal areas of a chip module disposed in an inlay substrate. (In this and other drawings, the antenna structure is illustrated comprising several turns of a wire spaced apart from one another, forming a "flat coil" configuration. The spacing may be much greater than shown, such as 10-20 times the wire diameter.)

**FIG. 3B** shows a single, wide antenna trench (or channel, or groove) 332 formed in a substrate 302 (such as an inlay substrate). An antenna structure (320) comprising having four turns 320a,b,c,d of antenna wire (a flat coil) is shown being disposed (installed into) the wide antenna trench 332. The antenna trench 332 may be several times wider than the diameter (or cross-dimension) of the wire (the wire need not have a round cross-section), so that the single wide antenna trench can accommodate the multiple turns of an antenna structure. For example, four turns of 80µm wire, spaced 40 µm apart from one another, in a 450µm wide antenna trench 322. The wide antenna trench 332 should have a depth (into the substrate) which is approximately equal to the diameter of the wire forming the antenna structure (320) so that the flat coil of the antenna structure (320) will be recessed at least flush within the trench, not protruding above the front surface of the substrate after it is installed. The trench (which is essentially a wide channel) may be formed by laser ablation. Typically, the turns of the antenna structure (320) would be spaced slightly apart from one another.

The turns of the antenna structure (320) may be laid (scribed) into the trench sequentially (turn-by-turn) using an ultrasonic sonotrode tool (such as in US 6,233,818). Alternatively, the antenna structure can be preformed, and disposed as a single unit into the wide trench. In conjunction with laying the antenna structure (320) in the trench (whether turn-by-turn or as a single unit), connection portions (ends, end portions) of the antenna being formed in the trench may be connected to terminals of a chip module.

Terminal ends (connection portions, ends, end portions) of a preformed antenna structure wire may be connected to terminals of the chip module (not shown) prior to installing the antenna structure in the wide antenna trench. Installing an antenna structure with chip module onto a substrate is disclosed in US 5,809,633 (Mundigl),

Glue may be dispensed in the wide antenna trench, such as the entire width of an antenna structure which may be formed (embedded) or placed (such as transferring an antenna structure, described below) into the antenna trench. The trench to accept an antenna structure may be partially filled with adhesive. Alternatively, a layer of adhesive could be disposed over the entire area of the inlay substrate covering (entering) both the trench for the antenna structure and the recess for the chip module. In placing the chip or chip module in its (laser ablated) recess, the adhesive may act as an anti-fretting medium to reduce the risk of microcracking especially in polycarbonate (PC) cards.

As an alternative to using wire, copper foil(s), such as punched (stamped) metallic foils may be laid into the antenna trench 332. A ribbon (such as copper) may be used. Conductive material disposed in channels (such as laser-ablated channels) may also be used. A process involving the selective deposition and formation of copper layers is described at http://www.kinegram.com/kinegram/com/home.nsf/contentview/~kinegram-rfid.

### Preparing Cover Layer Material

The material for the cover layer of an electronic passport may be a cloth product, with chemistry in the coatings and a leather-like appearance to the cloth (Holliston fabric). Typically, the cover material is supplied in web form and coated with an adhesive with a short opening time, before laminating with an inlay layer. Such web coating and lamination systems are supplied by Nordson. However, because of the nature of the fabric material and the supplier's manufacturing process, there may be many defects such as blemishes, scratches, cross directional lines, untextured surface, bent edges and dents in the cover layer when supplied in web form. The sorting of these defects is best done by the supplier of the cover layer, but this limits the format of the deliverable cover layer to sheets.

A Holliston fabric sheet may be approximately 360µm thick including an acrylic coating of a few microns on its top surface. The sheets may each measure 300mm long and 200 mm wide. Individual sheets of cover material may be converted (joined) into an endless web to be coated with an adhesive. Then, the web of coated cover layer material may be cut into sheets for lamination with inlay substrates to produce electronic passport covers. The sheets may be joined by overlapping opposite ends by approximately 1 cm and bonding them together, punctually (at distinct points, such as 2 cm apart) or continuously, using a hot stamp or an ultrasonic tool. The cover material bonds easily because of its acrylic coating. Many sheets may be joined in this manner to make a web (roll). For example, 100 sheets each 30cm long to form a continuous web 30m long. The overlap area may be excised.

The sheets may be another synthetic material such as Teslin™. A side extension, or edge region of a sheet (or substrate) may be thinned, such as by milling or laser ablation, such as to a fraction of the substrate's original thickness, such as to approximately 50% of the original thickness. By thinning the substrate at an edge region, an "overlap joint" may be made with another sheet, or with another element, such as a flap of plastic material. Laser ablation may be used to create "studs" along the thinned edge region of the sheet or substrate for inserting into holes of a separate element (not shown, such as a plastic flap), or vice-versa. Such a technique may be useful in a method for manufacturing a booklet, such as is disclosed in US 6,213,702.

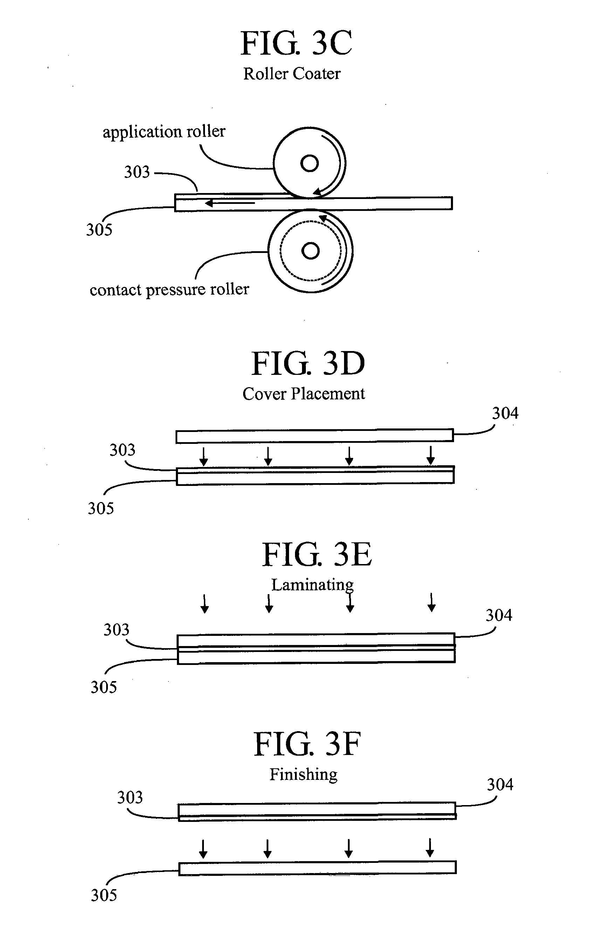

**FIGs. 3C-3F** illustrate a technique for smooth adhesive coating of and having a smooth adhesive finish on cover material, such as for an electronic passport, especially in the hinge area, to facilitate the adhesive attachment of the passport cover to the inlay. The material for the cover layer may be PVC coated offset board or acrylic coated cotton, embossed and thermo-resistant. In the case of the fabric material, the backside coating can be water-base coated (aqueous / non-solvent), synthetic coated or have no coating. The front side coating can have two base coatings and one top coating of acrylic. An alternative to acrylic coating is peroxylene-based coating (nitrocellulose). The fabric can have a strong bias (diagonal) in the weave (drill weave as opposed to linear weave) which gives it high tensile strength and restricts the elongation. The leather embossing grain can have the resemblance of the skin of a kid goat or sheep (skiver) and is applied using an embossing cylinder drum at a pressure of 60 tons at around 180 degrees Celsius (°C). Because of the front and backside coatings the fabric is not porous. The material for the cover layer may be a Holliston fabric.

In processing sheets, it may be necessary to use a roller coater system instead of a slot nozzle system (which is generally used in processing web material). The roller coater system basically applies the adhesive to the cover material via a rotating roller. A disadvantage of the roller coater system is that an impression (indent) is left on the adhesive layer from the roller, leaving a rough (irregular) surface texture. This may be particularly troublesome at the hinge area of an electronic cover inlay, having an uneven surface to attach the passport booklet to the inlay cover.

A smooth adhesive coating on the cover material may be realized by starting with a transfer substrate such as Teflon™, coating it with an adhesive layer, then later reactivating the adhesive layer through the application of heat and transferring the smooth side of the adhesive layer to the cover material. The smooth adhesive finish on the cover material, especially in the hinge area, may facilitate the adhesive attachment of the passport booklet to the inlay cover. Portions of the process may be applicable to other processes disclosed herein, and may be performed using the following steps.

**FIG. 3C** illustrates that a conventional roller coater system having an application roller and a contact pressure roller (silicone covered) can be used to coat a transfer substrate 305 having a very smooth surface, such as a sheet or continuous band of Teflon™ having a thickness of 0.230 mm, with an adhesive layer 303. The adhesive 303(such as polyurethane reactive glue) may be applied to the transfer substrate with minimal pressure at a temperature of approximately 150 °C. The top surface (as shown) of the transfer substrate 305 will thus be provided with a very smooth adhesive layer 303, of substantially constant thickness.

**FIG. 3D** illustrates that after applying the adhesive layer 303 to the transfer substrate 305, a layer of cover material 304 may be placed onto the adhesive-coated transfer substrate. **FIG. 3E** illustrates that next, at a belt lamination station, the adhesive 303 may be reactivated and become transferred to the cover material 304 by applying heat and pressure (arrows) to the "sandwich" of coated transfer substrate 303/305 and cover material 304. The pressure applied by the belt laminator to the sandwich may be approximately 2.5 Newtons. The reactivation temperature is approximately 160°C. The adhesive solidifies, non sticky, after the opening time of several seconds. **FIG. 3F** illustrates that in a final step, the cover material 304 (now with adhesive on it) is removed from the transfer substrate 305, with the adhesive layer 303 being transferred to the inner surface of the cover material 304. The resulting cover material (or layer, or simply "cover"), thus prepared with a substantially uniform adhesive layer 303, may later be laminated to an inlay.

### Forming Antenna Structures on an Antenna Substrate and Transferring Them to an Inlay Substrate

Generally, a plurality of antenna structures (or simply "antennas", or "antennae") may be formed (produced) at a plurality of antenna sites on an "antenna substrate" which is other than (separate from) the inlay substrate. Then, the antenna structures may be transferred (such as one-by-one or many at once) from the antenna substrate to the inlay substrate and joined with chip modules at transponder sites on the inlay substrate, with termination ends of the antenna structures already aligned over terminal areas of the chip modules for subsequent bonding thereto. The inlay substrate may be prepared with a wide trench for accepting the antenna structure (such as extending from a recess in which the chip module is installed). Alternatively, chip modules may be mounted and connected to antenna structures on the antenna substrate, and the combination(s) of antenna structure and chip module may be transferred to the transponder site(s).

The material of the antenna substrate is independent of and may be different than the material for the inlay substrate. For example, the inlay substrate may be PC or Teslin™. The antenna substrate may be a synthetic material such as PC, or PVC, or Teflon or a non-synthetic material, such as aluminum or paper, and may act as a carrier layer for a polyurethane adhesive (PU) layer. The inlay substrate is typically Teslin™ or PC.

The antenna substrate may be in the form of an elongate continuous web (or strip) of synthetic material upon which the plurality of antenna structures may be formed, one after the other, in a linear sequence (or one row of "n" antenna structures). The antenna substrate in such a "web format" may for example be approximately one antenna structure wide (such as several centimeters wide), and several (n) antenna structures long (such as several meters long). In such a web format, the pattern and layout of the several (n) antenna structures on the antenna substrate may be independent of a pattern and layout of a plurality of corresponding transponder sites on the inlay substrate, and generally antenna structures will be transferred one-by-one to selected transponder sites on the inlay substrate.

The antenna substrate may be in sheet format, and a 2-dimensional array (such as "n" rows and "m" columns) of antenna structures may be formed on the antenna substrate, such as for transfer "en masse" (many at once) to a corresponding plurality of transponder sites on an inlay substrate. In this case, the pattern and layout of the (n x m) antenna structures on the antenna substrate may correspond to a pattern and layout of corresponding transponder sites on the inlay substrate.

For populating the total number of transponder sites of a given inlay substrate, there should of course be at least a sufficient number of antenna structures available on the antenna substrate, but their layout (arrangement or positioning on the antenna substrate with respect to one another) may be entirely independent of the layout (arrangement or positioning) of the transponder sites on the inlay substrate.

Many of the techniques for forming antennae on an inlay substrate may be applied to forming antenna structures on antenna substrate (discussed above), such as using wire, self-bonding wire, forming channels in the substrate or on an adhesive layer on the substrate, and filling the channels with conductive material.

The transfer process may be effected by mechanical means or simply by heat and pressure (a laminating process). During the transfer process, the antennae alone may be transferred, or the antenna with some of the transfer substrate (or adhesive layer) may be transferred to the inlay substrate.

Various cover layers and underlay layers may be applied to the inlay substrate with antenna and chip module in place, and the several transponder sites may be separated from one another, becoming individual secure documents such as electronic passports or ID cards.

In some embodiments set forth herein, a single antenna structure at a single antenna site on the antenna substrate may be described, as exemplary of other of the several antenna structures at other antenna sites on the antenna substrate. A single transponder site showing a single chip module (or merely the recess for accepting the chip module) on the inlay substrate may be described as representative of other transponder sites on the inlay substrate.

### The Transfer Process, Generally

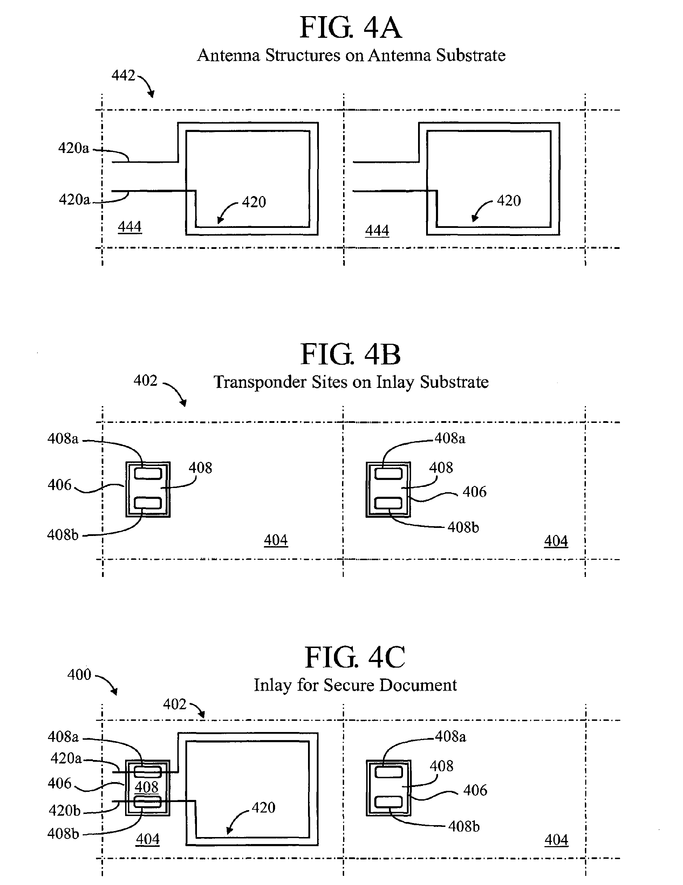

**FIGs**. **4A, 4B, 4C** provide an overview of forming antenna structures 420 at antenna sites 444 on an antenna substrate 442 **(****FIG. 4A****),** and transferring the antenna structures 420 to selected transponder sites 404 on an inlay substrate 402 **(****FIG. 4B****)** which may be prepared with chip modules 408 in recesses 406 at the transponder sites 444. The end result **(****FIG. 4C****)** may be an inlay for a secure document. Various exemplary embodiments of techniques for effecting the transfer may be shown in subsequent figures.

**FIG. 4A** illustrates a number of antenna sites 444 on an antenna substrate 442. An antenna structure 420 in the form of a flat coil antenna having several (such as four or five) turns and two termination ends 420a, 420b may be formed at each antenna site 444, using any of the techniques described hereinabove for embedding wire (110) in the substrate (202, 302) or in an adhesive layer (274), forming channels (222, 272), filling channels with conductive material (244) such as may have been discussed above with respect to inlay substrates. (In broad terms, the antenna structure comprises tracks of conductive material, which may be wire, on or in the antenna substrate or a layer on the inlay substrate.) Although only two antenna sites 442 are shown, the dashed lines indicate that there may be additional antenna sites above, below, to the left of and/or to the right of the illustrated antenna sites 442. The antenna substrate 442 may be in the form of an elongate web (or reel) having a single long row (1 x n) of several antenna structures 420A, or in the form of a sheet having two or more rows and columns (an array, such as 3 x 3) of antenna sites.

**FIG. 4B** illustrates a number of transponder sites 404 on an inlay substrate 402. Each transponder site 404 may be prepared with a recess 406 for receiving a chip module 408 having two terminal areas 408a, 408b. Although only two transponder sites 404 are shown, the dashed lines indicate that there may be additional transponder sites above, below, to the left of and/or to the right of the illustrated transponder sites 404. The inlay substrate 422 may be in the form of an elongate web (or reel) having a single long row (1 x n) of transponder sites 404, or in the form of a sheet having two or more rows and columns (an array, such as 3 x 3) of transponder sites. The inlay substrate 402 may be prepared with a wide antenna trench (332) such as discussed above for accepting accept the turns of the antenna structure.

**FIG. 4C** illustrates that an inlay (or transponder) 400 for a secure document may be formed by transferring antenna structures 420 to selected ones (one shown) of the transponder sites 404 on the inlay substrate 402, and connecting termination ends 420a, 420b of the antenna structure 420 to terminal areas 408a, 408b of the chip module 408. The antenna substrate 442 has been removed. Antenna structures 420 may be transferred one-by-one to corresponding selected ones of the transponder sites 404, or many can be transferred at once. In the figure, only one transponder site 404 is shown as having an antenna structure already transferred thereto to illustrate one-by-one transferring (the other transponder site is awaiting transfer of an antenna structure thereto). Various techniques for transferring are discussed below. Cover layers and/or overlay (or underlay) layers may be provided in a final product, such as a secure document which may be an electronic passport or ID card.

Security features such as markings may be incorporated into the inlay substrate 402, such as graphic designs in an area around or underneath the antenna structure 420. A hologram may be created using the laser on the underside of the inlay substrate 402, such as opposite the chip module.

Some inlay substrates comprise polycarbonate (PC), and tend to develop micro cracks in the area of the chip module (around the recess). To reduce the formation of (prevent) micro cracks developing in polycarbonate (PC), at the position of the chip module 408 (around the edge of the recess 406), the material of the inlay substrate 402 can be laser treated, a form of annealing it at the threshold fluence (just below ablating, with incubation effect).

Returning attention to **FIG. 4A****,** the antenna structure 420 can be arranged on or in the antenna substrate 442 (or a film or layer on a carrier) by scribing a wire conductor onto or into the material, such as by means of ultrasonic embedding. An 80-112µm diameter wire may be embedded partially in an adhesive film having a thickness of 50-80µm. The wire conductor can be an insulated wire or a self-bonding wire. Channels (222) may be provided in the antenna substrate 442 for receiving the antenna wire (210), but are generally not required. The process of embedding or sticking the antenna wire (210) to the antenna substrate 442 may be discontinuous, at several points, rather than continuous. Generally, in contrast with embedding a wire on an inlay substrate where fully embedding the wire is desirable, in some embodiments disclosed herein, it is intended that the antenna structure 420 will be substantially completely released from the antenna substrate 442 during the transfer process, in which case the antenna structure (typically formed from a wire) may be only partially or lightly embedded in the antenna substrate, or merely stuck to the surface thereof. In other embodiments, a portion of the antenna substrate 442 may accompany the antenna structure 420 during the transfer process, in which case it may be desirable to substantially fully and securely embed the antenna structure in the antenna substrate.

The antenna structure 420 may be formed from a sheet of metal such as a copper foil with a very thin layer of passivation (in Angstroms) to prevent oxidization, and the shape and tracks of the antenna could be realized by cutting the copper using a UV picosecond laser.

The antenna substrate 442 (carrier layer, carrier film) may be provided with channels for accepting a wire conductor, electronic ink, conductive paste, electrically charged nanoparticles or any conductive medium. A laser may be used to activate the medium for electrical conduction. Conductive materials may form tracks for an antenna structure on the surface of the substrate, rather than in channels.

The antenna structure 420 may be formed and mounted to the antenna substrate using a conventional method of coil winding (radial or flyer principle).

The removal (singulation) of the antenna structure 420 with its termination ends from the antenna substrate (carrier layer, carrier film) may be performed using various means such as a die punch, a laser for cutting or by means of lamination (heat and pressure), before transferring and mounting onto or into an inlay substrate. A contact transfer process (which may be a form of lamination) may also be used.

In a variation of the transfer process, the chip module may be mounted to the antenna on the antenna substrate prior to transfer, and the combination(s) of antenna and chip module may be transferred together to the transponder site(s).

### Some Techniques for Transferring the Antenna Structures

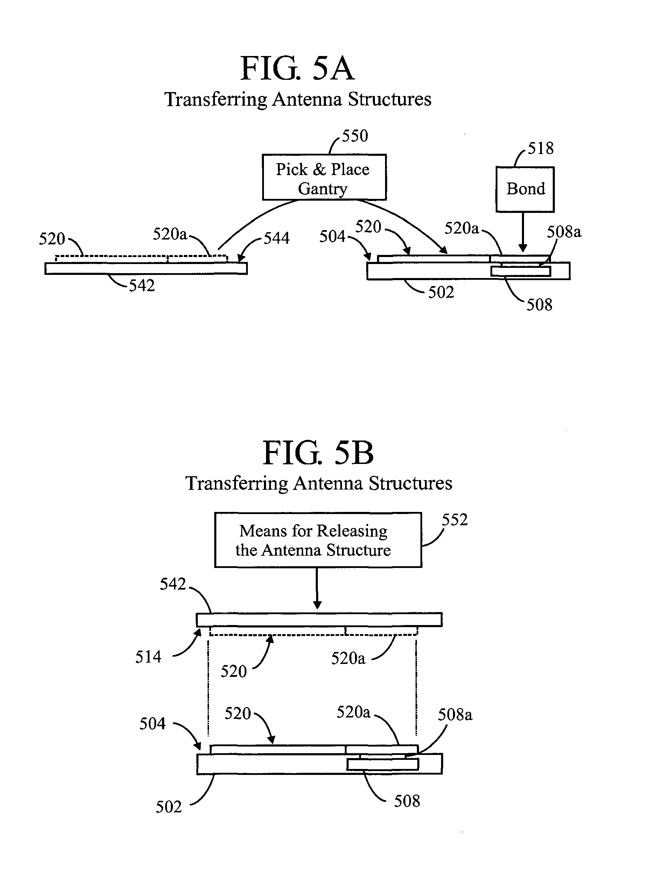

**FIG. 5A** shows a technique for transferring antenna structures from an antenna substrate to transponder sites on an inlay substrate. A representative antenna structure 520 (compare 420) having a representative termination end 520a (only one of two termination ends visible, compare 420a, 420b) which has been formed on a representative antenna site 544 (compare 444) on an antenna substrate 542 (compare 442). A representative transponder site 504 (compare 404) on an inlay substrate 502 (compare 402) comprises a chip module 508 (compare 408) disposed in a recess (not shown, compare 406) and having a representative terminal area 508a (only one of two termination ends visible, compare 408a, 408b).

A tool such as a conventional "pick & place" gantry 550 may be used to remove (pick) individual antenna structures 520 off of the antenna substrate 542 and transfer them, one-by-one, in an aligned manner, to selected transponder sites 504 on the inlay substrate 502, with their termination ends 520a aligned on terminal areas 508a of the chip module 508 for connecting, such as by subsequent bonding (518, compare 118) thereto. The antenna structure 520 is shown in dashed lines on the antenna substrate 542 from whence it was picked, and in solid lines on the inlay substrate 502 whereat it is placed.

The technique of **FIG. 5A** illustrates that the layout of antenna structures on the antenna substrate may be completely independent of the layout of transponder sites (and position of chip modules within the transponder sites) on the inlay substrate.

**FIG. 5B** shows a technique for transferring antenna structures from an antenna substrate to transponder sites on an inlay substrate. A representative antenna structure 520 having a representative termination end 510a which has been formed on a representative antenna site 544 on an antenna substrate 542. A representative transponder site 504 on an inlay substrate 502 comprises a chip module 508 disposed in a recess and having a representative terminal 508a.

In this embodiment, a relevant portion of the antenna substrate 544 may be oriented "face down", with the antenna structure 520 aligned over and spaced only slightly apart from the transponder site 504 on the inlay substrate 502. The gap between the antenna substrate 542 and the inlay substrate 502 is greatly exaggerated in this "exploded" view.

A pick and place tool (not shown, compare Pick & Place Gantry in **FIG. 5A**) can also be used to transport the antenna substrate or portion thereof, and the antenna substrate transporting an antenna structure may be held in position using vacuum through micro-holes in the pick & place tool. Mechanical means 552 may be employed for releasing (separating, ejecting) the antenna structure 520 from the antenna substrate 542, in an aligned manner onto the transponder site 504, with the representative termination end 510a on the representative terminal are 508a for subsequent bonding thereto. (The other termination end would similarly be aligned with the other terminal area.) The mechanical means 532 may comprise a pin or pins pressing on the back side (top, as viewed) of the antenna substrate 542. The pins may extend through holes (not shown) in the antenna substrate 542 to act directly on the antenna structure 520. The mechanical means 532 may cause flexing (or bowing) of the antenna substrate 542 so that the antenna structure 520 disassociates itself therefrom ("pops off") as a result of deformation of the antenna substrate 542. The antenna structure 520 (and termination end 510a) is shown in dashed lines on the antenna substrate 512 (pre-transfer), and in solid lines on the inlay substrate 502 (post-transfer). If the chip module 508 is first mounted and connected to the antenna structure 520, prior to making the transfer, this may help maintain alignment of the termination ends of the antenna structure, and may also facilitate separation of the antenna structure from the antenna substrate.

Alternatively, the means 552 for releasing the antenna structure 520 from the antenna substrate 542 may be a laser (beam) directed at the back side of the antenna substrate 542 tracing a path corresponding to the "footprint" or outline of the antenna structure 520 (on the front side of the antenna substrate 542) to cause (or assist) in releasing the antenna structure 520 from the antenna substrate 542 onto the inlay substrate 502. The fluence of the laser should be sufficient to heat a portion of the antenna substrate 542, causing softening or distorting, without penetrating the antenna substrate 542.

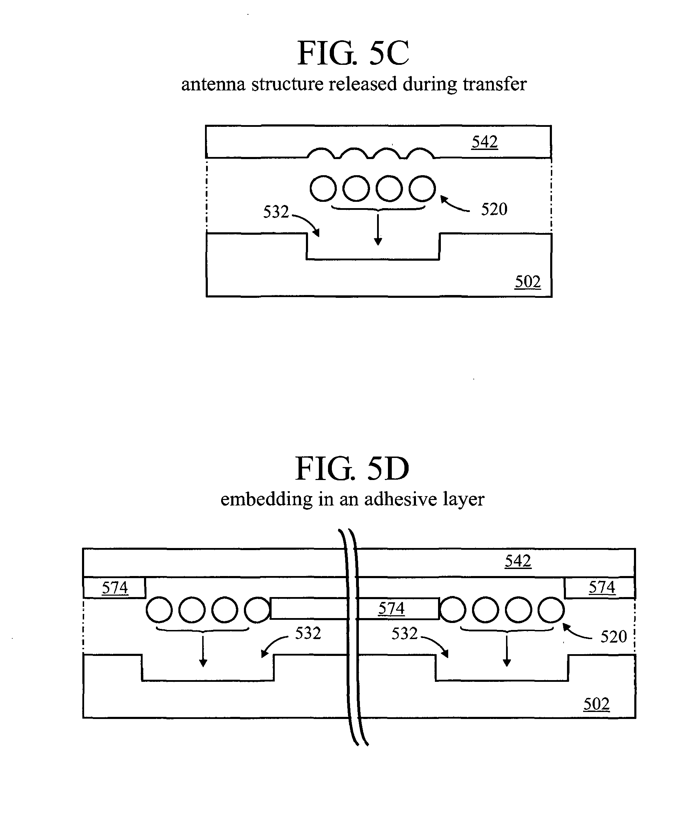

**FIG. 5C** is illustrative of any transfer process where the antenna structure 520 is released substantially entirely from the antenna substrate 542, substantially without any remaining antenna substrate material accompanying the antenna structure 520 to the inlay substrate 502. A main body portion of the antenna structure 520 (other than the termination ends) may be received in a wide trench 532 (compare 332) in the inlay substrate 502. (Only a relevant portion of the antenna structure 520 is shown, for illustrative clarity.) The antenna structure 520 may have only been partially (such as 10-20% of a wire diameter) embedded in the antenna substrate 542, sufficient to hold the wire in place during manufacture and handling, while facilitating its release therefrom during transfer. The antenna substrate 542 may be removed (and re-used) after the transfer process is complete.

**FIG. 5D** illustrates a transfer process where a wire (compare 210) is embedded in an adhesive layer 574 (compare 274) on an antenna substrate 542 functioning as a "carrier" (compare transfer substrate 305). The adhesive layer 574 may be polyurethane. Notice that the wire diameter (such as 100 µm) may be greater than the thickness (such as 80 µm) of the adhesive layer 574, resulting in cutting of the adhesive layer when laying the wire (forming the antenna structure 520). During transfer, such as in a laminating (or contact transfer) process, described hereinbelow, "residual" portions of the adhesive layer 574 remaining inside the main body of the antenna structure 520 (as shown) and between the individual turns of the antenna wire (omitted for illustrative clarity) may need to be removed.

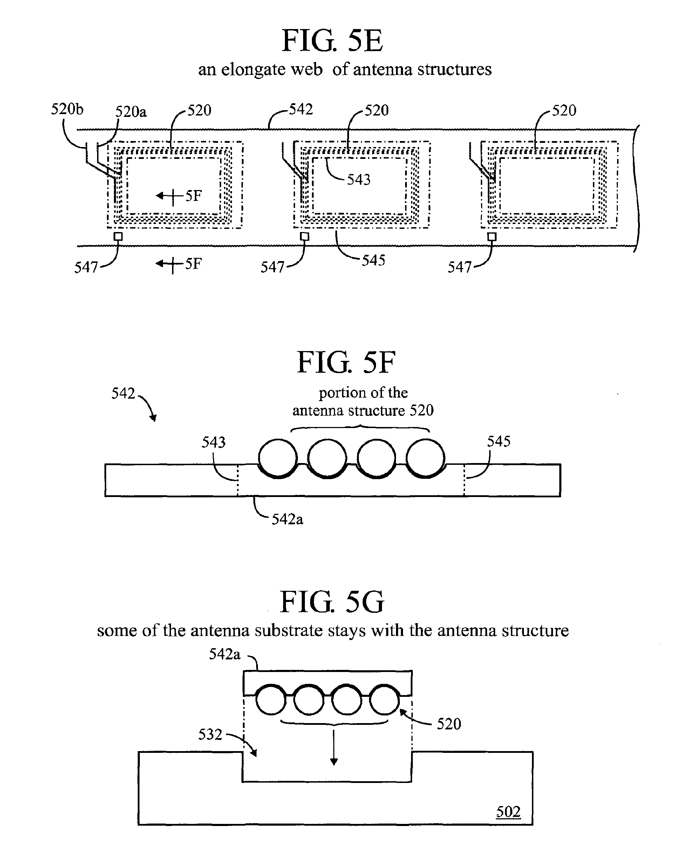

**FIGs. 5E,5F,5G** illustrate an embodiment wherein the antenna substrate 542 is in web format and is perforated so that a portion 542a of the antenna substrate 542 supporting the turns of the antenna structure 520 (exclusive of the termination ends 520a, 520b) may remain with the antenna structure 520 when it is transferred from the antenna substrate 542 to the inlay substrate 502. More particularly, a row (or ring) of perforations 543 may be created interior (adjacent, inside of) the turns of the antenna structure 520, and a row (or ring) of perforations 545 is disposed exterior (adjacent, outside of) the antenna structure 520. (In other words, the perforations are on the inner and outer edges of the main body of the antenna structure.) The perforations 543, 545 may be formed by laser ablation of the antenna substrate material, in a manner similar to forming channels, wide trenches or recesses, as described above. The antenna structure 520 may be wire embedded in the antenna substrate 542. It may be desirable to heat treat (such as laminate) the antenna substrate after embedding, to release tension which may be caused by the wire embedding process.

**FIG. 5E** illustrates the antenna substrate 542 an elongated carrier film (web) having one row of antenna structures 520. Holes 547 ("registration" holes) may be provided in the antenna substrate 542 to (i) indicate the positions of the antenna structures 520 and (ii) to function as "sprocket" holes for advancing the web in workstations for forming the antenna structures 520 on the antenna substrate 542 and for transferring the antenna structures 520 to an inlay substrate 502.

**FIG. 5F** illustrates that the portion 542a of the antenna substrate 542 remaining with the antenna structure 520 comprises a ring of antenna substrate material supporting the antenna structure 520 between the inner and outer rows of perforations 522 and 524. (The angles at which the termination ends extend from the main body portion of the antenna structure are shown differently in **FIG. 5E** than in **FIG. 4A** to suggest that various antenna configurations are possible.)

The perforations 543, 545 may be arranged so that the portion 542a of the antenna substrate 542 remaining with the antenna structure 520 during transfer supports the termination ends 520a and 520b of the antenna structure 520. Openings (not shown) may be formed in the portion 542a to facilitate bonding of the connection portions to the terminals of the chip module.

**FIG. 5F** illustrates a relevant portion of the antenna structure 520 (comprising four turns of wire) prior to the antenna structure 520 being separated from the antenna substrate 542. As indicated by this figure, the antenna structure 520 may be formed on the antenna substrate 542 with the antenna substrate "face up". Prior to transfer, the antenna substrate 542 with antenna structures 520 may laminated (heat and pressure applied) to create a smooth surface, "sealing" around the antenna structure 520. This may result, for example, in some (a thin film) of the antenna substrate material sticking to and staying with the antenna structure 520, which may result in greater stability of the antenna structure during the subsequent transfer process. The antenna structure 520 may be released from the antenna substrate 542, such as using mechanical means (532, **FIG. 5B**), with accompanying portion 542a of the antenna substrate (or layer of adhesive on the antenna substrate), and transferred to the inlay substrate 502.

**FIG. 5G** illustrates a relevant portion of the now "singulated" (separated from the antenna substrate 542) antenna structure 520 (comprising four turns of wire) after being separated from the antenna substrate 542. As indicated by this figure, the antenna structure 520 with remaining portion 542a of the antenna substrate 542 may first be inverted ("face down") prior to transferring the antenna structure 520 to the inlay substrate 502. As shown in this figure, the antenna structure 520 (with remaining portion 512a of the antenna substrate 512) may be disposed in a wide trench 532 formed in the inlay substrate 502. The antenna structure 520 may be well embedded into the inlay substrate 542 in this embodiment. (Contrast **FIG. 5C****,** where the antenna structure may be only lightly embedded in the antenna substrate.)

After transfer, in any of the techniques described herein, the termination ends of the antenna structure are aligned with terminal areas of the chip module for connecting thereto, as described above (e.g., **FIG. 4C**). The antenna substrate may have a sufficient number of antenna structures pre-fabricated thereon to populate a plurality of transponder sites on the inlay substrate.

### Laminating, or Contact Transfer

The process of transferring the antenna structure(s) to the transponder site(s) may be performed by first contacting (or nearly contacting) the relevant portion of the antenna substrate (carrier web) with the transponder site(s), whether one-by-one or several at once, then causing the antenna structure(s) to transfer (which may include sticking or adhering) to the transponder site(s), then removing (taking away) the antenna substrate. The transfer may occur without any of the antenna substrate transferring **(****FIG. 5C****),** with a portion of an adhesive layer transferring **(****FIG. 5D****)** or with a portion of the antenna substrate transferring **(****FIG. 5G****)** along with the antenna structure. The transfer process may be aided (facilitated) by using a different (dissimilar) material for the antenna substrate than for the inlay substrate, and may also be encouraged by performing a laminating process, for example, using a band laminator, or a roll coater. A coated, insulated or self-bonding wire may be used for the antenna structure, and surface tension, or simple adhesion may be the principle at work in "attracting" the antenna structure (whether wire, foil, conductive material, etc.) wire to the dissimilar material of the inlay substrate. Channels or a wide trench may be formed in the inlay substrate prior to the transfer, the structure of which may also aid in the transfer process.

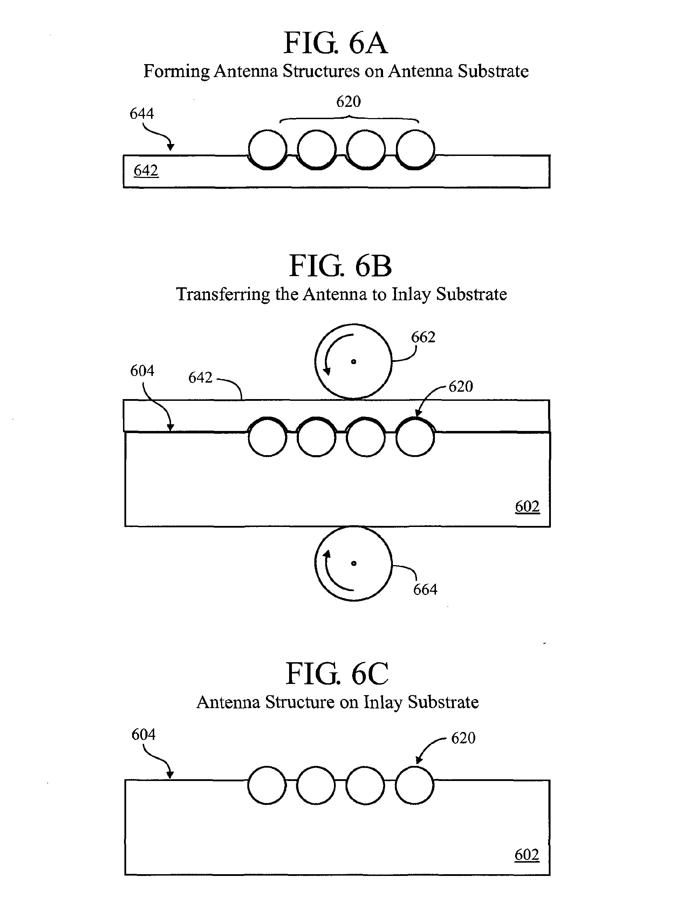

**FIG. 6A** shows a portion of a representative antenna structure 620 which has been formed on a representative antenna site 644 on an antenna substrate 642. The termination ends of the antenna structure are omitted, for illustrative clarity. The antenna substrate 642 may comprise PVC (approximately 250-340 µm), or paper. The antenna structure 620 may comprise insulated self-bonding wire (approximately 80-112µm).

**FIG. 6B** shows the antenna substrate 642 inverted ("face down") and disposed on a representative transponder site 604 on an inlay substrate 602. A chip module (having terminal areas) which may be disposed at the transponder site is omitted, for illustrative clarity. The inlay substrate 602 may comprise Teslin (approximately 350 µm), or PC (80-200µm). The antenna substrate 642 and inlay substrate 602 are put in (or through) a laminator, such as a band laminator which is illustrated (schematically) as having a upper roller (or band) 662 and a lower roller (or band) 664. (Compare **FIG. 3C**) Some exemplary parameters for effecting the transfer of an antenna from a PVC sheet to a Teslin sheet may include: applying pressure and/or heat may, such as 25n/m² at 75-80°C, feeding both sheets (substrates) though the band laminator at a speed of 2m/sec. This may be done with no cooling.

**FIG. 6C** shows that after laminating, the antenna substrate 642 may be removed, leaving the antenna structure 620 mounted to the inlay substrate 602. A deep trench (not shown, see 532) may be provided for receiving the turns (body portion) of the antenna structure 520.

In this laminating transfer process, the antenna substrate 642 which may be "face down" and the inlay substrate 602 which may be "face up" are brought into face-to-face aligned contact with one another and subjected to a physical process, such as a laminating process, which may involve at least one of pressure, heat or time in an amount which is sufficient to cause the antenna structure 620 to transfer from the antenna substrate 642 to the inlay substrate 602. This process may be referred to as a "contact transfer" process. The termination ends of the antenna structure may be physically disposed on the terminal areas of the chip module after laminating (or after any of the other transfer techniques disclosed herein, or their equivalents) for subsequent connecting (such as by thermocompression bonding) thereto. It is also possible that an electrical connection between the termination ends of the antenna structure and the terminal areas of the chip module may be effected during the transfer process (laminating or otherwise), without requiring a separate subsequent bonding process. For example, a conductive adhesive may be disposed on the terminal areas of the chip module prior to transferring the antenna structure, resulting in an electrical connection between the terminal ends of the antenna structure and the terminal areas of the chip module.

The physical process referred to in the contact transfer process may be other than laminating, such as causing the antenna substrate and inlay substrate to be at different temperatures and bringing them in contact with one another. For example, the antenna substrate may be in web form, supported by a heated roller or conveyor, and the inlay substrate may be at room temperature (cooler than the antenna substrate), or cooled, in which case the "physical process" would simply be causing a temperature differential between the antenna substrate and the inlay substrate. The physical process may comprise causing an airflow (or flow of inert gas) between the opposing surfaces of the antenna substrate and the inlay substrate to assist in transferring the antenna structure(s) from the antenna substrate to the inlay substrate.

Physical characteristics (or properties) of the antenna wire and/or antenna substrate and/or inlay substrate may be selected to facilitate the transfer of antenna structure from the antenna substrate to the inlay substrate. For example, the antenna substrate may be selected to have a lower glass transition temperature than the inlay substrate. (see http://plastics.inwiki.org/Glass_transition_temperature) Surface tension may also be a factor. Gravity may have an effect since the inlay substrate may typically be disposed under the antenna substrate during the transfer. The chip module may be connected to the antenna structure prior to transfer.

### Transferring an Array of Antenna Structures

Forming antenna structures on an antenna substrate in web format and transferring them one-by-one to transponder sites on an inlay substrate in sheet format has been emphasized above. The antenna substrate can be in sheet format, having an array of antenna structures, and antenna structures can be transferred several at once to an inlay substrate.

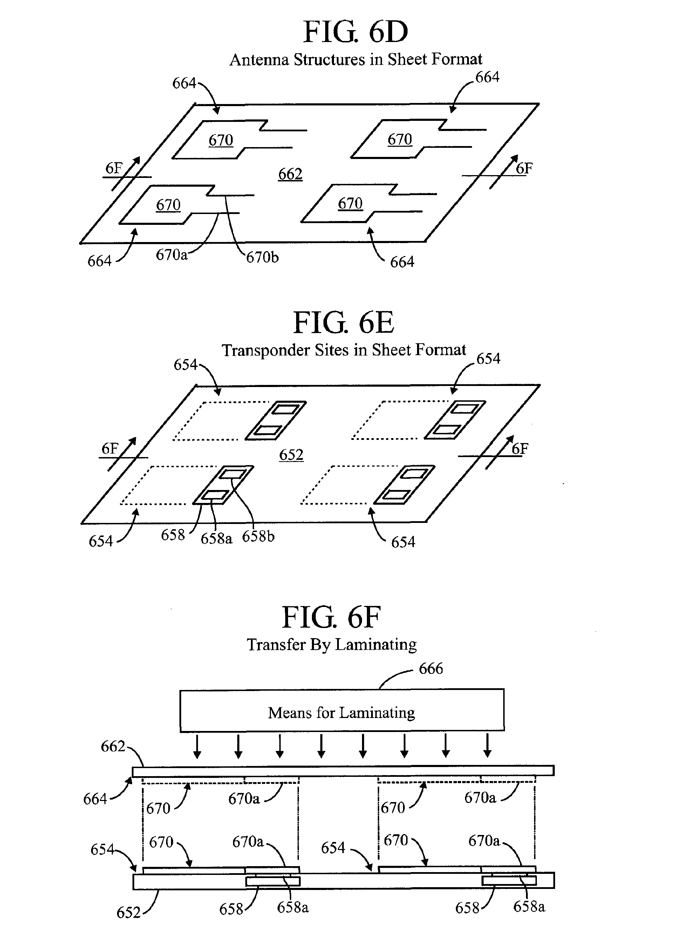

**FIG. 6D** shows a plurality of antenna structures 670 (compare 420) formed on a 2 x 2 array of (four) antenna sites 664 (compare 444) on an antenna substrate 662 (compare 442). Each antenna structure 670 is shown having only one turn, for illustrative clarity with two termination ends 670a, 670b (compare 420a, 420b). The antenna substrate 662 may comprise a layer of PVC having a thickness of 200 µm, or may comprise other materials, as described hereinabove. The antenna structures 670 may comprise wire, foil, or other conductive materials, as described hereinabove. The antenna structures 670 may be formed in an adhesive layer such as (574) described above. The antenna substrate may be perforated (543, 545) around the main body of the antenna structure, as described above.

**FIG. 6E** shows a plurality of chip modules 658 (compare 408) formed on a 2 x 2 array of transponder sites 654 (compare 404) on an inlay substrate 652 (compare 402). Each chip module 658 has two terminal areas 658a, 658b (compare 408a, 408b). Recesses in the inlay substrate are omitted, for illustrative clarity. The inlay substrate 652 may comprise a layer of Teslin™ having a thickness of 356 µm. The dashed line at each transponder site 654 indicates where the antenna structure 670 will be disposed (after transfer), and there may be a wide trench (not shown, compare 332) formed in the inlay substrate 652 for receiving the main body of the antenna structure 670.

**FIG. 6F** shows the antenna substrate 662 being brought into face-to-face contact, or into near (almost) face-to-face contact with the inlay substrate 652, for effecting the transfer of at least one (two illustrated) antenna structures 670 from the antenna substrate 662 to the inlay substrate 652. This figure is an exploded view. Means for laminating 666, which may include means for effecting any of the physical processes described hereinabove (pressure, temperature, temperature differential, air flow, etc.) may be used to cause or to assist a plurality of antenna structures 670 being transferred from the from the antenna substrate 662 to a like plurality of transponder sites 654 on the inlay substrate 652, substantially all at once, in an aligned manner, for subsequent connecting of the termination ends (only one end 670a is visible in the cross-section) of the antenna structures 670 to the terminal areas (only one terminal area 658a is visible in the cross-section) of the chip modules 658. The means for laminating 666 may be a roll press or a belt laminator. Connecting may be performed after or along with transferring.

### Populating_Transponder Sites with Prefabricated Antenna Structures

There has thus been shown various embodiments of techniques whereby, at least one antenna site of an antenna substrate prepared with an antenna structure may be transferred to at least one transponder site of an inlay substrate having a chip module. The antenna substrate may be in a web format having a single row of antenna structures, wherein the layout of the antenna structures is completely independent of the layout of the transponder sites. The antenna substrate may be in an "array format" wherein a plurality of antenna structures may be formed with a layout (such as an n x m array) of antenna sites corresponding with a layout of transponder sites on the inlay substrate. Insulation may be removed from insulated antenna wire at the termination ends (connection portions) of the antenna wire. The antenna structures may be transferred one-by-one (typical of a web format), or many at once (typical of a sheet format) from the antenna substrate to the inlay substrate. The inlay substrate may be prepared with wide trenches for receiving the antenna structures. An entire array of transponder sites on an inlay substrate may thus be populated with antenna structures. The transfer process results in the aligned placement of one or more antenna structures on one or more transponder sites for connecting (such as by bonding) termination ends of the antenna structure(s) to corresponding terminal areas of an RFID chip or chip module at the transponder site. After performing the transfer, the inlay substrate may be removed, leaving the antenna structure positioned with its termination ends on the terminal areas of the chip module for connection thereto. Cover layers and the like may be applied to the resulting inlay, thereby forming a secure document such as an electronic passport or ID card.

Generally, using the techniques disclosed herein, different format inlays (different arrangements of transponder sites on an inlay sheet) are readily accommodated, requiring only a simple programming change - where to place the antenna structures on the inlay substrate (transponder site) - the position of the "target" transponder site is programmable, requiring no mechanical adjustments for different inlay formats which otherwise would be the case with forming antennae on the inlay substrate.

The material of the antenna substrate (carrier substrate) upon which the antenna structures are formed ("pre-fabricated") may be the same or different than the material of the inlay substrate, and optimized for forming and transferring antenna structures. The antenna substrate generally does not form part of the resulting secure document (except, for example, in cases where portions of a perforated antenna substrate are transferred along with the antenna structure, see **FIG. 5G**).

Some advantages of techniques disclosed herein, particularly preparing the antenna structures off-line, is that generally no security requirement is needed in the material preparation facility. Forming antenna structures on the inlay substrate (such as in US 6,233,818) represents a "bottleneck". Inlays can only be produced as quickly as antennae can be embedded. By producing the antenna structures off-line, this bottleneck is eliminated. It is generally quicker and easier to transfer already formed antenna structures to the inlay substrate than to form antennae thereon. Equipment costs for transfer may also be significantly less than those for performing embedding. An end user (customer) will have the ability to produce as much end product as they wish. The customer can store reels or sheets of antenna substrate and prepared inlay substrates without having to worry about the security of the chip. Orders for secure documents can be prepared and delivered much more quickly ("Just In Time" production with regard to products with chips - no unnecessary storage of product that needs high security).

### Automated Production of Inlays for Secure Documents

A plurality of antenna substrates carrying antenna structures can be prepared ahead of time, such as in web format, manufacturing several reels of antenna structures at once. The antenna structures may be copper wire embedded into the antenna substrate, or conductive material on or in (such as in channels in) the antenna substrate. Each web (or reel) production may have its own sonotrode (and capillary) for wire embedding. A plurality of inlay substrates for receiving chip modules and antenna structures may be prepared ahead of time, such as in web format, manufacturing several reels of inlay substrates at once. On a production line, reels of antenna substrate prepared with antenna structures and reels of inlay substrate can be brought together, chip modules added, and inlays fabricated.

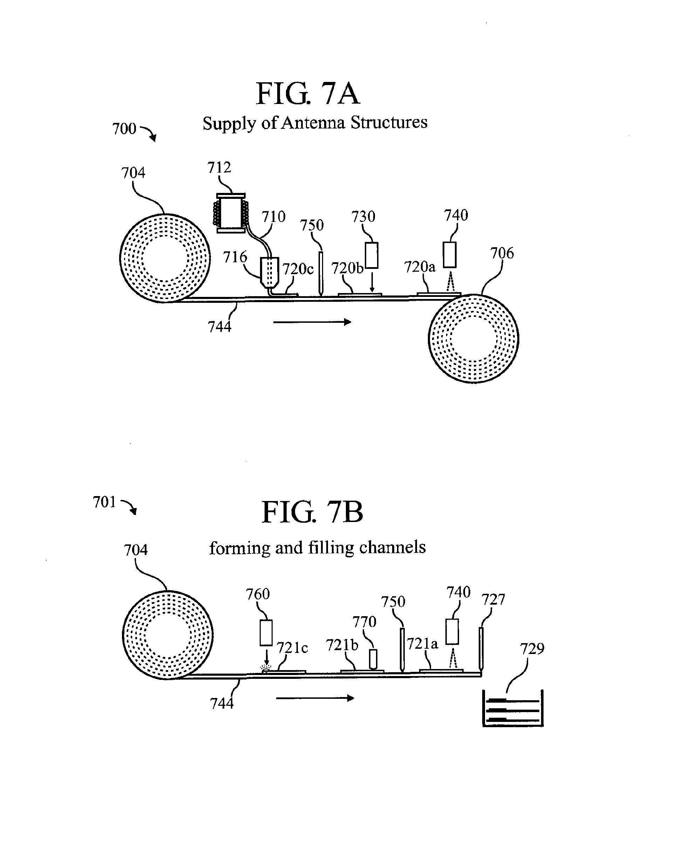

**FIG. 7A** illustrates an embodiment of a machine 700 (or workstation) for forming a plurality (a supply) of antenna structures (antennae) on an antenna substrate which may be in elongated web form (one row of many antenna structures (compare **FIG. 5E**) and stored on reels, for future transferring of the antenna structures to inlay substrates. A supply of antenna substrate material 744, such as paper or synthetic paper, may be provided on a supply reel 704. After antenna structures are mounted to the antenna substrate material (and other operations performed, as described below), the finished antenna substrate web with antenna structures may be taken up (stored) on an output reel 706 for delivery to a customer (or warehousing).

The antenna substrate material 744 may be fed from left to right (as viewed) on a conventional conveyor system, with a length of antenna substrate laid out (extending) between the supply reel 704 and the output reel 706 of sufficient length to permit various operations to be performed at various positions along the length.

At a first position, antenna wire 710 may be fed from a supply spool 712 through a capillary 716 for mounting to the antenna substrate, in a conventional manner resulting in an antenna structure 720c. See, for example, US 6,233,818.

At a second position, means such as a laser 730 is shown directing a beam at the antenna structure 720b for removing insulation from terminal ends (connection portions) of the antenna structure. See, for example US 7,546,671, which also disclosed removing insulation prior to embedding.

At a third position, means such as a spray nozzle 740 is shown for applying a protective (or "passivation") coating to the wire, particularly where insulation may have been removed, to prevent oxidation. Other sprays may be provided for other purposes, such as for enhancing subsequent transfer of the antenna structures to the inlay substrate, or for enhancing mounting of the antenna structures to the inlay substrate.

At a fourth position (shown between the first and second positions), means such as a die punch 750 are provided for punching holes in the substrate material for indexing the location of antenna structures, or as sprocket holes. (Compare the holes 547 shown in **FIG. 5E****.**) The antenna substrate material 744 may be pre-punched, as supplied on the reel 704, in which case the positions of forming the antenna structures 720a, 720b and 720c (720) would be "timed" to be at known positions with relation to the sprocket/timing holes (513). The same or another punching mechanism can be used to perforate the antenna substrate around the outer and inner periphery of the antenna structure, as described hereinabove (perforations 543 and 545, **FIG. 5E**). Other marks, indicia, fiducials serial numbers and/or security markings can be applied to the antenna substrate using this, or another tool.

Other processes may be performed at other positions along the length of antenna substrate material 744 between input and output reels, such as laser ablation of channels for accepting an antenna wire. See, for example, US 2008/0179404. Or, a mechanical tool or an ultrasonic stamp tool may be used to form a groove in a surface of a substrate, or a process using heat and molding may be employed. See, for example, US 2009/0315320.

The antenna structure need not be formed of wire. Rather, channels may be formed in the antenna substrate, such as by laser ablation, and filled with conductive material. See, for example, US 2009/0315320. The conductive material may be viscous, such as metallic powder or conductive glue. Alternatively, traces of conductive material can be formed or laid on the surface of the antenna substrate, rather than in channels. Various combinations of any of the techniques disclosed herein or elsewhere for forming antennae for inlays may be used to obtain the desired transferable flat coil antenna structures on the antenna substrate with termination ends aligned for positioning over terminal areas of chip modules and connecting thereto.

**FIG. 7B** illustrates an embodiment of a machine 701 (or workstation) for forming a plurality (a supply) of antenna structures (antennae) on web of antenna substrate material 744 in web form supplied on a reel 704 and subjected to a number of processes before being cut by a guillotine 727 into sheet format 729. In this embodiment, a supply of wire and capillary are not required, and removal of an insulating coating from a self-bonding wire is not required. Rather, means 760 are provided for forming channels. The means 760 may be a laser, ablating material from the antenna substrate. The channel 721c is illustrated atop the substrate, for illustrative clarity, but it will be understood that the channel extends into the surface of the substrate. (The previously formed channels 721b and 721a are also shown atop the substrate.) Means 770 are provided for filling the channels, such as with the aforementioned conductive material or glue, and using a squeegee to ensure that the channels are filled and to remove excess conductive material from the surface of the substrate. A punching mechanism 750 and spray head 740 may be provided.

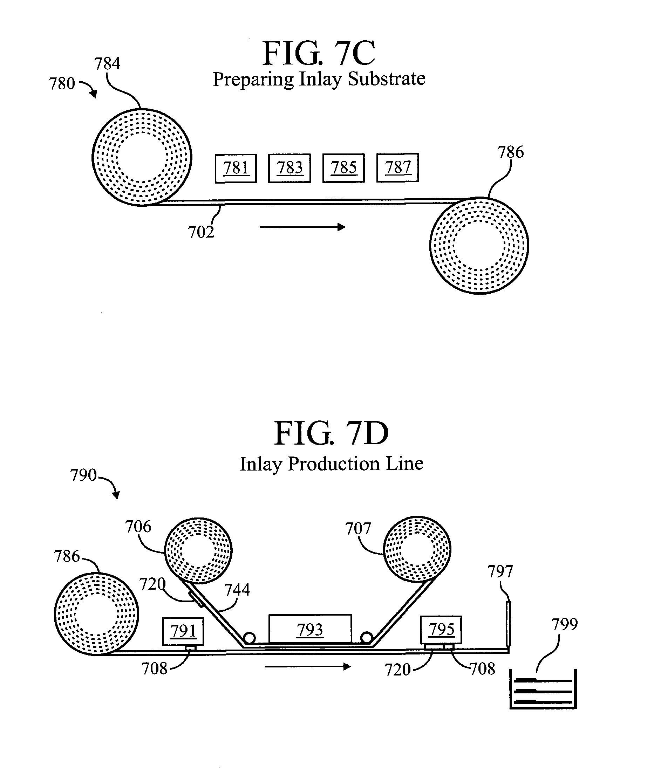

**FIG. 7C** illustrates an example of a machine 703 (or workstation) for producing inlay substrate. Inlay substrate material 702 is provided from a supply reel 784, past a number of workstations (or processes) to an output reel 786. For example, at a position 781, punching holes or hinge gaps (122). At a position 783, recesses for chip modules may be formed. At positions 785 and 787, Other processes may be performed, such as may be described elsewhere herein.

**FIG. 7D** illustrates an example of an inlay production line 790. Antenna substrate material 744 with antenna structures 720 is provided by an input reel 706 (which was the output reel in **FIG. 7A**). Inlay substrate material 702 prepared with recesses for receiving chip modules is provided by an input reel 786 (which was the output reel in **FIG. 7C**). Chip modules 708 may be inserted into the recesses at a position (or station) 791. (The chip modules are shown on the substrate, rather than in a recess, for illustrative clarity.) In a "collating" step", the antenna substrate 744 with antenna structures 720 is laid on top of the inlay substrate 702 with chip modules 708 and pass though a laminating station 793 to transfer the antenna structures 720 to transponder sites on the inlay substrate with terminal ends of the antenna structures aligned on terminal areas of the chip modules, as described hereinabove. After passing through the laminator 793, the antenna substrate material 844 (minus antenna structures 820) may be taken up on a take-up reel 707 ("de-collated"), and re-used. After passing through the laminator 793, the inlay substrate 702 with chip modules 708 and antenna structures 720 pass a station 795 for bonding the terminal ends of the antenna structures 720 to the terminal areas of the chip modules 708, as described hereinabove. Then, the inlay (inlay substrate plus chip module plus antenna structure) can be cut into sheets 799 using a guillotine 797. Alternatively, the output could be a reel of inlays in web form.

### Kits for Manufacturing Inlays

According to some embodiments of the invention, "kits" may be provided for manufacturing inlays and secure documents. The kits may be supplied in various configurations including, but not limited to one or more of the components described hereinbelow, including various combinations thereof. Generally, some of the kit components described herein can be produced in large volume "offline", and are generic in the sense that they are not "personalized" and do not require a high level of security for handling. Later, a personalized (secure) chip module can be merged therewith to produce the secure document.

### Antenna Component (800)

As described above, antenna structures may be prefabricated, off-line, using wire or other conductive material on or in (such as in channels) an antenna substrate. The antenna structures may be formed on the antenna substrate using various of the techniques for mounting antennas to or forming antennas on inlay substrates, or variations thereof, as described above. The material of the antenna substrate is generally independent of the material of the inlay substrate. Various techniques are described hereinabove for effecting transfer of antenna structures individually (one-by-one) or en masse (many at once) from the antenna substrate to selected transponder sites on the inlay substrate.

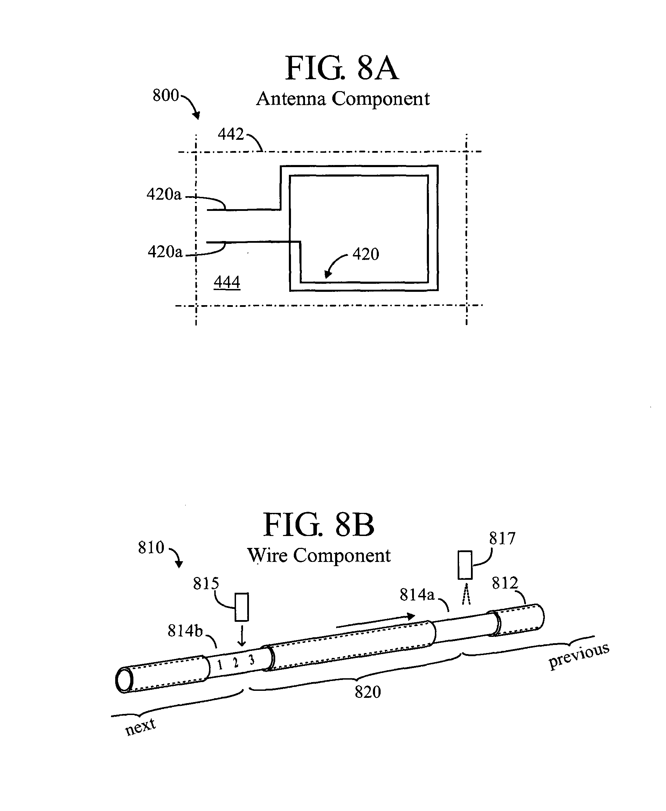

**FIG. 8A** illustrates an antenna component 800 which may be included in a kit for manufacturing inlays for secure documents. The antenna component 800 may comprise an antenna substrate (442) having a plurality of antenna sites (444), with antenna structures (420) formed thereon. The antenna component 800 may incorporate any one or more of the following features:
- the antenna substrate may be in web format, supplied on a reel
- the antenna substrate may be in sheet format
- an adhesive layer may be provided on the antenna substrate, and antenna wire may be laid in the adhesive layer.
- channels may be formed in the antenna substrate or in an adhesive layer provided on the antenna substrate, and the channels may be filled with conductive material.
- An antenna structure comprising self-bonding wire may be formed without channels, by sticking (without significant embedding of) the wire in the desired pattern to the antenna substrate, either continuously or a number of discrete points
- An antenna structure may be formed on the surface of the substrate using a printing process, with a conductive ink, or the like
- A resulting antenna structure may be in the form of a flat (substantially planar) coil having at least one (such as four or five) turns of wire, foil, conductive tracks, or the like, and two termination ends.
- in the case of antenna wire which is insulated wire, insulation may be removed from termination ends (420a, 420b) of the antenna wire which will be connected (bonded) to terminal areas of a chip module.

Generally, a plurality of antenna structures may prepared in advance on the antenna substrate, and later transferred on an "as needed" basis selected transponder sites on the inlay substrate, and connected to the RFID chip (or chip module) at the transponder sites. Optionally a chip module may be connected to the antenna structure.

### Wire Component (810)

As described above, it may be advantageous to remove insulation from termination ends of insulated (such as self-bonding) antenna wire to enhance subsequent bonding to terminals of a chip module, and may also be beneficial to re-coat the areas of wire where insulation has been removed with a thin "passivation" layer to inhibit oxidation. The passivation layer may be more "thermode-friendly" than the original layers of insulation.

The antenna wire may be insulated and/or self-bonding wire. If using insulated wire, the insulation (and self-bonding) layers may be removed, such as by using an excimer laser (UV), at the positions for interconnection (end portions, connection portions or terminal ends of the antenna wire). For example, for an antenna having an overall length of 114cm, insulation may be removed for 1-2 cm, every 114 cm. To avoid subsequent oxidization, the bare (copper) portions of the wire may be coated with a very thin layer of insulation which may evaporate at low temperature during thermo compression bonding.

**FIG. 8B** shows an antenna component 810 comprising a length of antenna wire having layer(s) of insulation 812. Compare, for example, the insulated wire shown in FIG. 6 of US 7,546,671. Insulation may be removed at of selected positions (areas) along the length of the wire. Two positions 814a and 814b where insulation has been removed from the wire are illustrated. For example, each position may have a length of approximately 2 cm, and the positions may be spaced a distance apart corresponding to a desired overall length of an antenna structure, such as approximately 112 cm. Each of the positions 814a and 814b stripped of insulation is sufficiently long (such as 2cm) to comprise a one termination end of a given antenna structure 820 and an opposite termination end of another (subsequent/next or previous) antenna structure.

Any suitable technique may be used for removing insulation. For example, a laser 815 (compare 730) may be used to remove insulation 812 from the antenna wire. Or, a flame may be used to vaporize the insulation 812 at the positions 812a and 812b. After the insulation is removed, a passivation layer may be applied, such as using a sprayer 817 (compare 740) over the entire wire or only at the areas where the insulation has been removed. The wire may be dipped in a solution to provide passivation at the positions 812a and 812b whereat insulation has been stripped from the wire. Insulated wire for the wire component 810 may be supplied in spool form, unwound at a workstation (not shown), travel from left to right as shown, past an insulation removal station (815) and a passivation application station (817), then dried and re-spooled to be used as a wire component (compare 712) for making antenna structures (compare 420), either on an inlay substrate (such as 402) or on an antenna substrate (442).

In this manner, a supply of insulated antenna wire has been prepared with insulation removed at positions corresponding to termination ends (end portions) of antenna structures, to facilitate subsequent bonding of the termination ends to terminal areas of chip modules, thereby eliminating the need for performing insulation removal when mounting an antenna (compare 110) or transferring an antenna structure (compare 720) to an inlay substrate. Markings ("1 2 3") may be provided on the wire, such as by the laser 815 or by stamping, to "personalize" the wire such as with a serial number, production batch number and or manufacturer's code as an additional security feature.

### Inlay Substrate Component (820)

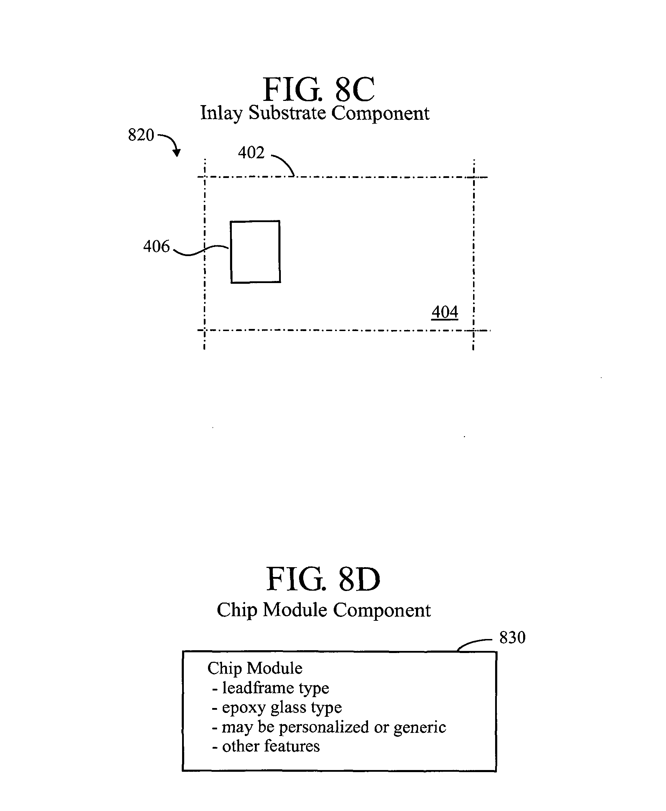

**FIG. 8C** illustrates an inlay substrate component 820 comprising a substrate 402 for receiving a chip module (408), typically including typically, a recess 406 for receiving the chip module 408 (see also **FIG. 2A**). The inlay substrate component 820 may be in sheet form or web form, and may be prepared with various features including but not limited to one or more of the following, which may be shown in other figures:
- channels 222 (see **FIG. 2C**) forming a 2-dimensional pattern for laying antenna wire 110 (see **FIG. 3A**) or filling with conductive material 244 (see **FIG. 2F**) to form an antenna. Channels may cross over one another (see **FIG. 2D**).
- a wide trench (see FIG. 3B) for receiving an antenna structure 420 (see FIG. 4A)
- end portions of an antenna may extend into a bottom portion of the recess (see **FIG. 9A**)
- an antenna wire provided with squiggles at its ends (see **FIG. 9C**)
- various features for holding the chip module (408, 908) in the recess 406, and for relieving stress (see **FIGs. 9D****,** **9E****,** **9F****,** **9H**) and for evidencing tampering (see **FIG. 9****J**)
- "security features", such as serial numbers, holograms and the like
- fusible links indicating electromagnetic intrusion (discussed below)

The inlay substrate component 820 may also be prepared with antenna wire mounted thereto, with termination ends (end portions) spaced wide enough apart to receive a chip module therebetween, from the same side of the inlay substrate as the antenna. Subsequently, either the end portions of the wire are moved onto the terminals for bonding thereto, or the chip module or substrate may be manipulated to bring the end portions of the antenna wire into alignment with the terminals of the chip module, as described. See, for example, US 7,546,671, US 7,581,308 and US 2008/0073800. See also US 6,233,818, US 2008/0314990 and US 7,229,022, which disclose an inlay substrate prepared with antennae, end portions of which span an opening extending through the substrate, and a chip module installed from the side of the substrate is opposite to the antenna.

### Chip Module Component (830)

**FIG. 8D** illustrates that a chip module (such as 108, 408) may be supplied as a component 830 of a kit for manufacturing secure documents. Chip modules are generally well known, including leadframe type and epoxy glass type. The chip module may be a "secure item", which has been personalized to a user, such as with biometric data. Generally, the other components (antenna substrate, antenna wire, inlay substrate, glue, cover material, etc.) are not "secure" components, they are generic until a personalized chip module has been installed in the inlay substrate. Of course, some of these components (such as inlay substrate, cover material, even the wire) may be provided with security markings, whether generic (such as a holographic image), or personalized (such as a serial number). The chip module component 830 may incorporate other features such as contact pads (terminal areas) specifically formed to receive terminal ends of antenna structures which may be wire, foil, conductive paste, etc., as described above. The leadframe (914) of a chip module may specially formed to mate with features of a specially formed recess. (see **FIG. 9G**)

### Glue Component (840)

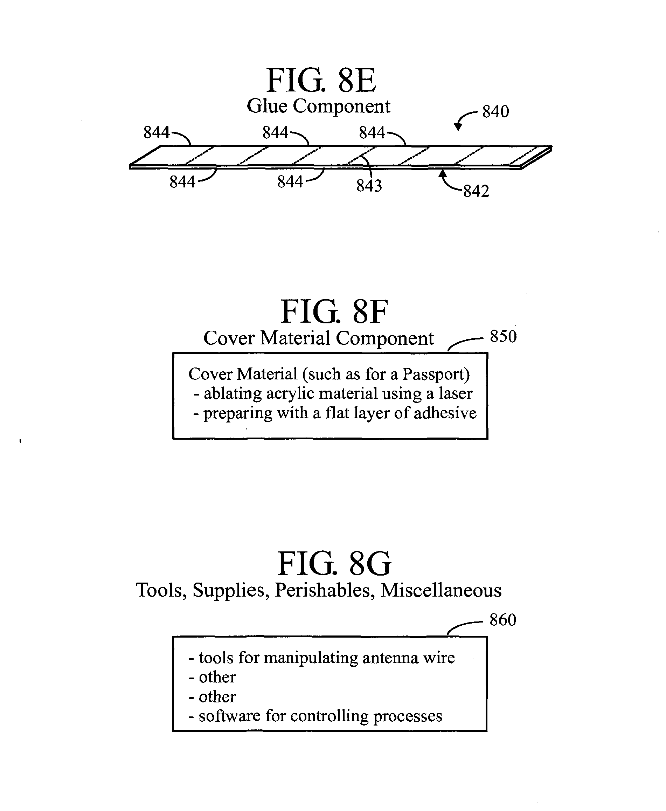

**FIG. 8E** shows a glue component 840 that may be supplied with a kit for manufacturing inlays. The glue component 840 may comprise a strip 842 or film of glue (adhesive) comprising several interconnected pieces 844. Perforations 843 may be provided between the pieces 842 for facilitating their separation (singulation) from the strip 842. Alternatively, several individual pieces of adhesive may be provided. The pieces 842 of adhesive may be place in the recesses of transponder sites of an inlay substrate, for holding the chip modules in the recesses. To this end, the pieces may be rectangular (typically, a recess is rectangular), and smaller than the recess.

### Cover Material Component (850)

**FIG. 8F** shows a cover material component 850. The cover material, typically in sheet form, may be prepared with a flat uniform layer of adhesive already applied thereto, ready to be laminated to an inlay substrate (having a chip module and antenna wire) to complete a secure document. Refer to **FIG. 3F****,** hereinabove.

Since the textile of the cover material (104) may be coated with an acrylic, it may be beneficial (before laminating the cover to the inlay) to partially remove acrylic around an area corresponding to the chip module (108) and antenna (110) by ablating the material using a UV laser, and also to reduce the surface tension of the material by applying (increasing) temperature before coating. The latter procedure prevents curling of the material after lamination with the inlay layer (102) such as Teslin™, and may steps may augment the adhesion and shear strength. A cover layer component 850 may be prepared in this manner.

### Other Components (860)

**FIG. 8G** shows that various tools, fixtures, perishables, software and the like may be provided as components 860 of a kit to facilitate using components of the kit or for implementing any aspect of manufacturing a secure document. For example:
- as disclosed in US 7,546,671, tools for manipulating end portions of the antenna wire, such as a simple mechanical tool (960), such as elongate member with a concave pushing end (962) to push free-standing loops onto terminals of the chip module, or a "pull" tool (978), in the form of a hook to pull the wire (966) over to atop the terminals. - software for controlling processes, such as laser ablation of features (for example notches, trenches, channels, slots, perforations, etc.).

### Some Kit Configurations

As mentioned above, a "kit" for manufacturing inlays for security documents may comprise various combinations of one or more of the components described herein, for example (but not limited to the following exemplary configurations):
- an antenna substrate component 800 with antenna structures already formed
   - and an inlay substrate component 820
      - and a glue component 840
      - and a cover material component 850
   - an inlay substrate component 820
      - and an insulated wire component 810

### An Inlay Substrate Component

**FIGs. 9A, 9B** illustrate an inlay substrate 902 that may be a kit component (820). A stepped pocket recess 906 for a chip module 908 is formed in a substrate 902 and has an upper wider portion 906a for the leadframe 914 (compare 114) of a chip module 908 (compare 108) and a lower narrower portion 1006b for the mold mass (compare 112) of the chip module 908. A conductive track which may be a wire or conductive material disposed in a channel forms an antenna 920 having termination ends 920a, 920b extending into the recess 906 and across the bottom portion 906b thereof. If a self-bonding wire is used, insulation may be removed from the termination ends 920a, 920b to facilitate connecting to terminal areas 908a, 908b of the leadframe 914 of the chip module 908. As best viewed in **FIG. 9B****,** holes 909a, 909b are formed through the terminal area 908a, 908b of the leadframe 914. The holes 909a, 909b may be micro holes which are percussion drilled into the metal leadframe 914 of the chip module 908 at each terminal area 909a, 909b to allow for the welding (such as with a laser "L"), soldering or crimping of the leadframe terminals to the respective termination ends 920a, 920b of the antenna 920. Notice in **FIG. 1C** (for example) that the end portions 110a, 110b of the antenna wire 110 are connected on an opposite side of leadframe 114 than the mold mass 112. In contrast thereto, in **FIG. 9C****,** the terminal ends 920a, 920b of the antenna (wire) 920 are connected on the same side of leadframe as the mold mass

The channels and recess in substrates disclosed herein may be ablated with a nanosecond (ns), picosecond (ps) or femtosecond (fs) laser operating at UV (ultraviolet), VIS (visible) or IR (infrared). The substrate may be a polymer, such as porous (Teslin™) or non-porous (polycarbonate) or can be doped to facilitate the laser ablation process. The ablation can take place in an inert atmosphere and the polymer can be heated or chilled prior to laser treatment. Laser ablation is particularly good with a porous polymer, as its porosity facilitates the ablation process.

### An Inlay Substrate Component

**FIG. 9C** illustrates an inlay substrate 902 having a conductive trace forming an antenna 920 having two termination ends 920a, 920b. The antenna 920 may be an antenna structure preformed on an antenna substrate and transferred to the inlay substrate. The inlay substrate 902 may comprise various laminated sheets, may be of a synthetic material such as PVC, may be in credit card format and may have a thickness of approximately 250 µm (microns). The antenna 920 may be a HF antenna with a number of turns (compare 110).

End portions (or termination ends) 920a, and 920b of the antenna 920 may be formed with squiggles or meanders to provide an area of increased surface area for receiving and being connected with terminal areas attachment of a chip module (such as a dual-interface (DI) chip module). These squiggles or meanders may be considered to be "contact areas", and are generally located on opposite sides of a transponder site 906 (shown in dashed lines) on the surface of the substrate 902 where a chip module (not shown) will be mounted. The transponder site 906 need not be, and generally is not a recess

The substrate 902 with antenna 920 already embedded may be provided in reel or sheet form, as a kit component. Or, channels may be formed in the substrate 902 to accept antenna wire such as the antenna wire component 810 comprising insulated wire having insulation removed from areas 814a, 814b corresponding (when mounted) to the end portions 920a, 920b.

### Additional Inlay Substrate Features

In addition to forming recesses and/or channels for accepting wire, other mechanical and security features may be incorporated into the inlay substrate component (820), such as by using laser ablation.

**FIG. 9D** illustrates a recess 906 formed in an inlay substrate 902. The inlay substrate 902 may be for a national ID card, and may comprise Teslin™ or polycarbonate (PC). The recess may, for example, be 5mm x 8mm. A chip module disposed in the recess 906 may be an epoxy-glass module, and is omitted, for illustrative clarity. Trenches 923 in the form of narrow slots or perforations may be formed near (adjacent, next to) the recess 906, such as within a few millimeters thereof. The trenches may be short line segments, such as 0.5 mm wide by 2 mm long, and arranged in a pattern radiating from the periphery of the recess 906, and may extend to near the perimeter of the recess, or may extend completely to the recess. The trenches 923 extend at least partially through the inlay substrate 902 (from the front surface thereof towards the back surface thereof), and may provide stress relief to de-stress the inlay substrate 902 layer during hot lamination of a cover layer (not shown) to the inlay substrate 902. For example, for an 80 µm thick inlay substrate, the "stress-relief" trenches may extend only approximately 40 µm through the substrate. The trenches 923 may allow for flexure of the inlay substrate 902, such as during hot lamination, without buckling, which otherwise may result in a bumpy or dented front surface of the inlay substrate 902.

### Notches for holding the Chip Module in Position

**FIGs. 9E, 9F** illustrates a recess 906 formed in an inlay substrate 902 which may be an inlay substrate component (820). Notches 907 may be formed in sides of the recess 906 such as by laser ablation, or stamping. The notches 907 may extend into one or more side edges of the recess 906, may be semicircular, or triangular (for example). Pins 909, such as wedge-shaped pins, may be inserted into the notches which will decrease the cross-dimension of the recess, thereby holding a chip module (not shown) in place, such as for further handling (applying adhesive and cover layer). The pins 909 may have a cross-dimension (diameter) slightly greater than the cross-dimension of the notch 907, so that when a pin 909 is inserted into the notch 907, the inlay substrate material between the notch 907 and the recess 906 deflects towards the chip module, holding (pinching) it in place. The notches 907 and pins 909 may eliminate the need for gluing the chip module in place and allowing for easy handling of the inlay substrate 902 during wire embedding and interconnection processes. **FIG. 9E** also shows a security feature which may be a unique serial number (01234567890) etched or otherwise provided on the inlay substrate 902.

### Bumps For Preventing The Chip Module From Rotating

**FIG. 9G** shows an inlay substrate 902 having a recess 906 for a chip module 908 comprising a leadframe 914 and a mold mass 912 and which may be supplied as a kit component (820). Instead of having notches in the sidewalls of the recess, bumps 906a, 906b, 906c and 906b extend into the opening of the recess 906 from the sidewalls thereof to stabilize the chip module 908 from moving (such as rotating) when it is in the recess 906. The lower part of the drawing shows the chip module 908 as a leadframe type chip module (compare FIG. 1C) having a mold mass 912 (within which is an RFID chip) on a leadframe 914. The dashed line shows the chip module 908 being installed in the recess 906. Notches 914a, 914b, 914c and 914d in the leadframe 914 correspond with the bumps 906a, 906b, 906c and 906b extending from the sidewalls of the recess 906.

As is evident from some of the embodiments disclosed herein various "mechanical" features may be provided in the recess and/or in the chip module, such as chip modules with punched out notches for insertion in laser ablated recesses (a formed window recess may also be sufficient) with matching studs or bumps to prevent fretting of the chip module after lamination in a polycarbonate (PC) card body.

### Slots for holding the Chip Module in Position

**FIG. 9H, 9I** illustrate a recess 906 formed in an inlay substrate 902 which may be an inlay component 820 of a kit for manufacturing inlays. The inlay substrate 902 may be for a national ID card, and may comprise Teslin™ or polycarbonate (PC). The recess 906 may, for example, be 5mm x 8mm. The chip module 908 may be an epoxy-glass module. Slots 911 may be formed in a manner similar to other laser ablated features (such as the aforementioned notches, trenches, grooves, channels, perforations, small recesses). The slots 911 may be disposed outside of the recess, but near to (adjacent) the recess. The slots 911 may be rectangular, measuring 5-8 mm x 1 mm, may be disposed generally parallel to side edges of the recess 906, and may extend at least partially through the inlay substrate (from the front surface thereof towards the back surface thereof). For example, for an 80 µm thick inlay substrate having a 60µm deep pocket-type recess, the slots 911 may extend as deep as the recess. In a manner similar to the notches/pins (907/909) described above **(****FIGs. 9E****, 9F)**, the slots 911 may hold the chip module 908 in place, especially when moving inlay substrates with a format of transponder sites from one production process to the next. The slots 911 may eliminate the need for gluing the chip module 908 in place. Using glue to adhesively attach a chip module 908 to an inlay substrate has the disadvantage that the surface finish of the inlay substrate 902 after lamination highlights the position of the chip module in an electronic passport or national identity card which is a security risk. Optionally, pins, such as wedge-shaped pins, may be inserted into the slots 911 which will decrease the cross-dimension of the recess 906, thereby holding the chip module 908 in place, such as for further handling (applying adhesive and cover layer). The pins would have a cross-dimension (diameter) slightly greater than the cross-dimension of the slots 908, so that when pins are inserted into the slots 911, the inlay substrate material between the slots 911 and the recess 906 deflects towards the chip module 908, holding (pinching) it in place,

### Some Additional Features for an Inlay Substrate Component

**FIGs. 9I, 9J** illustrate an inlay substrate 902 which may be a kit component 820. A chip module 908 is shown disposed in a recess 906, and an antenna 920 (which may be an antenna structure transferred to the inlay substrate) with termination ends connected to terminal areas of the chip module 908. Perforations 913 are formed at least partially through the substrate 902 around the recess 906, such as a few millimeters away from the recess 906, creating a "protected area" around the recess 906. The perforations 913 may be arranged in any suitable pattern at least partially encircling the protected area. Alternatively, the perforations 913 may be in a line (or lines) passing across the protected area. The perforations can be other than straight line segments, such as "s" shaped, and may overlap and/or intersect each other. If an attempt is made to peel the inlay substrate from a cover material, the perforations 913 may cause the inlay substrate 902 to tear, thereby effectively defeating efforts to delaminate the inlay and tamper with the chip module 908.

A hologram (not shown) may be created on the underside of the inlay substrate, such as opposite the chip module.

Polycarbonate (PC) inlay substrates tend to develop micro cracks in the area of the chip module (around the recess). To reduce this tendency, the material of the inlay substrate in and around the area of the recess can be laser treated, a form of annealing it at the threshold fluence (just below ablating, with incubation effect).

The electronic function of an electronic passport can be destroyed by an intense electromagnetic field, such as may result from microwave electromagnetic waves. Since there may be no way of knowing if someone did such an act deliberately, the chip would need to be investigated. An inlay substrate may be provided with a visible fusible link which may indicate such tampering, such as by incorporating a visible wire bridge (not shown) on the inlay substrate which would break if subjected to microwave electromagnetic energy.

While the invention has been described with respect to a limited number of embodiments, these should not be construed as limitations on the scope of the invention, but rather as examples of some of the embodiments. Those skilled in the art may envision other possible variations, modifications, and implementations that are also within the scope of the invention, based on the disclosure(s) set forth herein.

## Claims

1. Method of making an RFID inlay comprising an inlay substrate (102, 202, 252, 302, 402, 502, 602, 652, 702, 820, 902,) having a plurality of transponder sites (404) comprising chip modules (108, 408, 508, 658), comprising:
forming a plurality of antenna structures (420) at a plurality of antenna sites (444, 514) on an antenna substrate (442, 542, 744, 800);
**characterized by**:
transferring the antenna structures from the antenna substrate to selected ones of the transponder sites by completely separating or substantially entirely separating the antenna structures from the antenna substrate.

2. The method of claim 1, further comprising:
after transferring, removing the antenna substrate (FIGs. 5D, 6C, 7D).

3. The method of claim 1, further comprising:
forming the antenna structures in an adhesive layer (574) on the antenna substrate.

4. The method of claim 1, further comprising:
transferring the antenna structures by applying pressure and/or heat (FIG. 6B).

5. The method of claim 1, further comprising:
preparing a transponder site with a wide trench (532) for receiving at least a portion of the antenna structure (FIGs. 5C, 5G) being transferred thereto.

6. The method of claim 1, wherein the antenna structure comprises an insulated wire, and further comprising:
prior to transferring, removing insulation (730) from at least a portion of the terminal ends of the antenna structures.

7. The method of claim 1, wherein the antenna structures are formed at least in part by:
scribing a wire conductor onto or into the antenna substrate or a film or layer on the antenna substrate, such as by means of ultrasonic embedding.

8. The method of claim 1, further comprising:
connecting terminal ends (420a/b, 520a/b, 670a/b) of the antenna structures to corresponding terminal areas (408a/b, 508a, 658a/b) of the chip modules which are at the transponder sites.

9. The method of claim 1, further comprising:
transferring the antenna structures one-by-one or many at once to the transponder sites.

10. A kit for making RFID inlays according to method of claim 1 comprising:
an antenna component (800) comprising an antenna substrate (444, 542, 642, 662, 744) and a plurality of antenna structures (420, 520, 620, 720) formed on the antenna substrate; and
an inlay substrate component (820) comprising an inlay substrate (404) prepared with a recess (206, 406, 1006) for receiving a chip module (408, 508, 658, 1008) and at least one of:
channels (222, 272, 322) for receiving an antenna wire,
a wide trench (322) for receiving at least a portion of an antenna structure,
an antenna wire (920) with squiggles at its ends (920a, 920b) for receiving terminal areas of a chip module,
trenches (923) extending to near or into the recess,
notches (907) in sides of the recess for receiving pins (909),
bumps (906a,b,c,d) extending from sides of the recess for stabilizing a chip module from moving when it is in the recess,
slots (911) disposed adjacent the recess for holding a chip module in the recess,
perforations (913) disposed around the recess.

11. The kit of claim 10, further comprising at least one of the following components:
a chip module component (830);
a glue component (840); and
a cover material component (850).

12. The kit of claim 10, wherein:
the antenna component is supplied in web format (542, 704).

13. The kit of claim 10, wherein:
the antenna substrate comprises at least one material selected from the group consisting of polycarbonate (PC), polyvinyl chloride (PVC), paper, Teflon and polyurethane.

14. The kit of claim 10, wherein:
the inlay substrate component comprises a synthetic material selected from the group consisting of polycarbonate (PC) and Teslin™.

## Patentansprüche

1. Verfahren zur Herstellung eines RFID-Inlays, umfassend ein Inlaysubstrat (102, 202, 252, 302, 402, 502, 602, 652, 702, 820, 902), das eine Vielzahl an Transponderstellen (404), die Chipmodule (108, 408, 508, 658) umfassen, hat, umfassend:
Ausbilden einer Vielzahl an Antennenstrukturen (420) an einer Vielzahl von Antennenstellen (444, 514) auf einem Antennensubstrat (442, 542, 744, 800);
**gekennzeichnet durch**:
Versetzen der Antennenstrukturen von dem Antennensubstrat zu ausgewählten Transponderstellen, indem die Antennenstrukturen vollständig oder im Wesentlichen vollständig von dem Antennensubstrat separiert werden.

2. Verfahren nach Anspruch 1, weiter umfassend:
Entfernen des Antennensubstrats (Figuren 5D, 6C, 7D) nach dem Versetzen.

3. Verfahren nach Anspruch 1, weiter umfassend:
Ausbilden der Antennenstrukturen in einer Kleberschicht (574) auf dem Antennensubstrat.

4. Verfahren nach Anspruch 1, weiter umfassend:
Versetzen der Antennenstrukturen durch Anwenden von Druck und/oder Hitze (Figur 6B).

5. Verfahren nach Anspruch 1, weiter umfassend:
Vorbereiten einer Transponderstelle mit einer breiten Furche (532) zur Aufnahme mindestens eines Teils der Antennenstruktur (Figuren 5C, 5G), die dorthin versetzt wird.

6. Verfahren nach Anspruch 1, wobei die Antennenstruktur einen isolierten Draht umfasst und weiter umfassend:
vor dem Versetzen Entfernen einer Isolation (730) von mindestens einem Teil der terminalen Enden der Antennenstrukturen.

7. Verfahren nach Anspruch 1, wobei die Antennenstrukturen zumindest zum Teil dadurch gebildet werden, dass ein Leiterdraht auf oder in das Antennensubstrat oder einen Film oder eine Schicht auf dem Antennensubstrat geritzt wird, wie z. B. mittels Ultraschalleinbettung.

8. Verfahren nach Anspruch 1, weiter umfassend:
Verbinden von terminalen Enden (420a/b, 520 a/b, 670 a/b) der Antennenstrukturen mit entsprechenden Anschlussbereichen (408a/b, 508a, 658a/b) der Chipmodule, die an den Transponderstellen sind.

9. Verfahren nach Anspruch 1, weiter umfassend:
Versetzen der Antennenstrukturen einzeln oder viele zugleich zu den Transponderstellen.

10. Kit zur Herstellung von RFID-Inlays nach dem Verfahren von Anspruch 1, umfassend:
eine Antennenkomponente (800), die ein Antennensubstrat (444, 542, 642, 662, 744) und eine Vielzahl an Antennenstrukturen (420, 520, 620, 720), welche auf dem Antennensubstrat ausgebildet sind, umfasst; und
eine Inlaysubstratkomponente (820), die ein Inlaysubstrat (404), das mit einer Aussparung (206, 406, 1006) zur Aufnahme eines Chipmoduls (408, 508, 658, 1008) vorbereitet ist,
und mindestens eines der Folgenden umfasst:
Kanäle (222, 272, 322) zur Aufnahme eines Antennendrahts,
eine breite Furche (322) zur Aufnahme mindestens eines Teils einer Antennenstruktur,
einen Antennendraht (920) mit Kringeln an seinen Enden (920a, 920b) zur Aufnahme von Anschlussbereichen eines Chipmoduls,
Furchen (923), die sich in die Nähe der Aussparung oder in die Aussparung hinein erstrecken,
Kerben (907) im Rand der Aussparung zur Aufnahme von Stiften (909),
Höcker (906a,b,c, d), die sich von Rändern der Aussparung erstrecken, zum Sichern eines Chipmoduls vor Bewegung, wenn es in der Aussparung ist,
Schlitze (911), die benachbart zu der Aussparung angeordnet sind, um ein Chipmodul in der Aussparung zu halten,
Perforierungen (913), die um die Aussparung herum angeordnet sind.

11. Kit nach Anspruch 10, weiter umfassend mindestens eine der folgenden Komponenten:
eine Chipmodulkomponente (830);
eine Kleberkomponente (840);
eine Deckmaterialkomponente (850).

12. Kit nach Anspruch 10, wobei
die Antennenkomponente in einem Bandformat (542, 704) bereitgestellt wird.

13. Kit nach Anspruch 10, wobei
das Antennensubstrat mindestens ein Material, ausgewählt aus der Gruppe, bestehend aus Polycarbonat (PC), Polyvinylchlorid (PVC), Papier, Teflon und Polyurethan, umfasst.

14. Kit nach Anspruch 10, wobei die Inlaysubstratkomponente mindestens ein synthetisches Material, ausgewählt aus der Gruppe, bestehend aus Polycarbonat (PC) und Teslin™, umfasst.

## Revendications

1. Procédé de fabrication d'un inlay RFID comprenant un substrat d'inlay (102, 202, 252, 302, 402, 502, 602, 652, 702, 820, 902) ayant une pluralité de sites de transpondeur (404) comprenant des modules à puce (108, 408, 508, 658) comprenant :
la formation d'une pluralité de structures d'antenne (420) à une pluralité de sites d'antenne (444, 514) sur un substrat d'antenne (442, 542, 744, 800),
**caractérisé par**
le transfert des structures d'antenne du substrat d'antenne à des sites de transpondeur sélectionnés en séparant complètement ou en séparant substantiellement entièrement les structures d'antenne du substrat d'antenne.

2. Procédé selon la revendication 1 comprenant de plus : après le transfert, l'enlèvement du substrat d'antenne (fig. 5D, 6C, 7D).

3. Procédé selon la revendication 1 comprenant de plus : la formation des structures d'antenne dans une couche adhésive (574) sur le substrat d'antenne.

4. Procédé selon la revendication 1 comprenant de plus : le transfert des structures d'antenne en appliquant de la pression et/ou de la chaleur (fig. 6B).

5. Procédé selon la revendication 1 comprenant de plus : la préparation d'un site de transpondeur avec une large rainure (532) pour recevoir au moins une portion de la structure d'antenne (fig. 5C, 5G) qui y est transférée.

6. Procédé selon la revendication 1, la structure d'antenne comprenant un fil isolé et comprenant de plus :
avant le transfert, l'enlèvement de l'isolation (730) d'au moins une portion des extrémités de bornes des structures d'antenne.

7. Procédé selon la revendication 1, les structures d'antenne étant formées au moins en partie par : gravure d'un fil conducteur sur ou dans le substrat d'antenne ou d'un film ou d'une couche sur le substrat d'antenne comme au moyen d'incrustation par ultrasons.

8. Procédé selon la revendication 1 comprenant de plus : la connexion des extrémités de bornes (420a/b, 520a/b, 670a/b) des structures d'antenne aux régions de bornes correspondantes (408a/b, 508a, 658a/b) des modules à puce qui sont aux sites de transpondeur.

9. Procédé selon la revendication 1 comprenant de plus : le transfert des structures d'antenne une par une ou beaucoup à la fois aux sites de transpondeur.

10. Kit pour fabrication d'inlays RFID selon le procédé de la revendication 1 comprenant :
un composant d'antenne (800) comprenant un substrat d'antenne (444, 542, 642, 662, 744) et une pluralité de structures d'antenne (420, 520, 620, 720) formées sur le substrat d'antenne ; et
un composant de substrat d'inlay (820) comprenant un substrat d'inlay (404) préparé avec un évidement (206, 406, 1006) pour recevoir un module à puce (408, 508, 658, 1008) et
au moins l'un des éléments suivants :
des canaux (222, 272, 322) pour recevoir un fil d'antenne,
une large rainure (322) pour recevoir au moins une portion d'une structure d'antenne,
un fil d'antenne (920) avec des méandres à ses extrémités (920a, 920b) pour recevoir des régions de bornes d'un module à puce,
des rainures (923) qui s'étendent près de ou dans l'évidement,
des encoches (907) dans des côtés de l'évidement pour recevoir des fiches (909),
des bosses (906a, b, c, d) qui s'étendent à partir des côtés de l'évidement pour stabiliser un module à puce pour l'empêcher de se déplacer lorsqu'il est dans l'évidement,
des fentes (911) disposées adjacentes à l'évidement pour maintenir un module à puce dans l'évidement,
des perforations (913) disposées autour de l'évidement.

11. Kit selon la revendication 10 comprenant de plus au moins l'un des composants suivants :
un composant de module à puce (830) ;
un composant de colle (840) ; et
un composant de matière de recouvrement (850).

12. Kit selon la revendication 10, le composant d'antenne étant fourni en format de bande (542, 704).

13. Kit selon la revendication 10, le substrat d'antenne comprenant au moins un matériau sélectionné dans le groupe composé du polycarbonate (PC), du chlorure de polyvinyle (PVC), du papier, du Téflon et du polyuréthane.

14. Kit selon la revendication 10, le composant de substrat d'inlay comprenant une matière synthétique sélectionnée dans le groupe composé du polycarbonate (PC) et du Teslin™.
